# FASCICULE DE BREVET EUROPEEN

(11) **EP 1 581 425 B1**
(45) Date de publication et mention de la délivrance du brevet: **16.08.2006**
(21) Numéro de dépôt: 03799696.4
(22) Date de dépôt: 23.12.2003
(51) Int. Cl.: B64F 1/18

(54) **AIRE D'ATTERRISSAGE PORTABLE POUR HELICOPTERE ET SON PROCEDE D'UTILISATION**
TRAGBARE MARKIERVORRICHTUNG FÜR HUBSCHRAUBERLANDEPLATZ UND SEINE VERWENDUNG
PORTABLE HELICOPTER LANDING AREA AND USE METHOD THEREOF

(30) Priorité: 30.12.2002 FR 0216840
(43) Date de publication de la demande: 05.10.2005
(73) Titulaire: Malhomme, Luc, 43410 Lempdes sur Allagnon (FR)
(72) Inventeur: Malhomme, Luc, 43410 Lempdes sur Allagnon (FR)
(74) Mandataire: Schwartz, Thierry J.
(86) Numéro de dépôt international: PCT/FR2003/003879
(87) Numéro de publication internationale: WO 2004/060745

(56) Documents cités:
- EP-A- 1 197 437
- WO-A-98/41448
- US-A- 3 589 183
- US-A- 5 559 510
- US-A- 5 832 867
- US-B1- 6 329 933
- PATENT ABSTRACTS OF JAPAN vol. 1998, no. 08, 30 juin 1998 (1998-06-30) & JP 10 067399 A (JAPAN AIRCRAFT MFG CO LTD), 10 mars 1998 (1998-03-10)
- PATENT ABSTRACTS OF JAPAN vol. 2000, no. 13, 5 février 2001 (2001-02-05) & JP 2000 280995 A (JAPAN AIRCRAFT MFG CO LTD), 10 octobre 2000 (2000-10-10)

## Description

La présente invention concerne un procédé et un dispositif utilisables notamment pour localiser et baliser toute surface ou aire de pose choisie pour une intervention, de nuit ou par mauvais temps, d'au moins une équipe aéroportée et notamment héliportée, réalisant en particulier une ou des opérations de secours. Un tel dispositif est connu du document US-A-5559510. Cette équipe coopère avec au moins une personne intervenant au sol munie dudit dispositif et se trouvant sur ladite surface ou aire de pose choisie, afin de permettre l'approche, l'atterrissage et/ou le décollage, rapide et sûr, de tout type d'aéronef et notamment d'hélicoptère, transportant la ou lesdites équipes aéroportées et notamment héliportées.

L'invention permet notamment l'intervention rapide d'équipes aéroportées et notamment héliportées, en leur permettant, après avoir été mises en contact avec ladite au moins une personne intervenant au sol munie du dispositif conforme à l'invention dont elle assure la mise en place rapide, d'intervenir sur ladite surface ou aire de pose choisie en étant assuré d'un guidage sûr, d'un atterrissage et d'un décollage fiable sur ladite surface ou aire de pose choisie.

À ce jour, les aéronefs, et notamment les hélicoptères de secours, n'ont pas la possibilité d'intervenir de nuit ou par mauvais temps.

Par exemple, en cas d'accident de la route, lorsque les secours interviennent sur des blessés, les services de secours estiment que les chances de survie du blessé qui souffre d'insuffisance respiratoire sont de plus de quatre-vingts pour cent s'ils interviennent sur le blessé dans les trente minutes qui suivent l'accident afin d'assurer l'oxygénation du cerveau essentielle à la survie. Au bout de quarante minutes après l'accident, les chances de survie sont de moins de trente-cinq pour cent, après cinquante minutes, elles descendent au-dessous de dix pour cent et une heure après l'accident, aucun secours n'est, en théorie, plus d'aucune utilité.

Ces statistiques tragiques ont donc conduit la plupart des services d'urgence à utiliser l'hélicoptère de jour car lui seul permet de se rendre en moins de dix minutes sur la surface ou l'aire de pose requise dans les limites géographiques moyennes d'un département.

Si, de jour, les hélicoptères de secours sauvent de nombreuses vies en intervenant directement sur les lieux d'un accident, de nuit, par contre, les hélicoptères se déplacent uniquement à partir d'un hôpital équipé d'un balisage lumineux fixe vers un autre hôpital lui aussi balisé pour assurer le transfert des blessés. Toutefois, ils ne peuvent donc intervenir de nuit directement sur les lieux de l'accident pour des raisons évidentes de sécurité alors que l'on constate que c'est justement de nuit que plus d'un tiers des accidents les plus graves se produit.

Les statistiques européennes montrent que chaque deuxième crise cardiaque et plus de la moitié des cas d'apoplexie a lieu entre vingt heures et six heures du matin, de nombreuses vies sont donc sacrifiées en l'absence d'une solution technique au problème pose.

En fait, de nuit en vol à vue, l'approche, l'atterrissage et/ou le décollage en hélicoptère sur ou à partir d'une aire ou d'une surface donnée appelée hélisurface, sont laissées à l'appréciation et à la responsabilité du pilote commandant de bord. Ce type de manoeuvre en campagne de nuit présente d'énormes risques d'accident.

La visualisation précise du point de pose et/ou des obstacles sur la pente d'approche et/ou de départ, la force et la direction du vent sur la surface donnée est impossible sans balisage lumineux, ni manche à air.

L'expérience a prouvé que les atterrissages d'hélicoptères à l'aide de phares de véhicules au sol pour éclairer l'aire d'intervention ont coûté la perte de plus de vies qu'ils n'en ont sauvées.

Le procédé et le dispositif pour la mise en oeuvre de ce procédé conformes à la présente invention remédient à ces inconvénients en permettant la mise en place rapide et sûre d'une unité de localisation visuelle et de balisage sur la surface ou l'aire de pose choisie, en vue de localiser et de baliser ladite surface ou aire de pose choisie pour permettre l'intervention d'équipes aéroportées et notamment héliportées. Plus particulièrement, l'invention vise l'atterrissage et/ou le décollage, rapide et fiable, de nuit ou par mauvais temps, de tous types d'aéronefs et notamment d'hélicoptères, transportant la ou lesdites équipes aéroportées et notamment héliportées.

De ce fait, la présente invention offre la possibilité de poser un hélicoptère, de nuit ou par mauvais temps, sur les lieux d'un accident pour permettre l'intervention rapide des équipes de secours et le transfert immédiat des blessés vers les hôpitaux les plus proches. Il est donc désormais possible, par exemple, de pré-équiper les hôpitaux non balisés et les véhicules d'intervention de secours au sol d'un dispositif léger, compact, intégral, portable par un seul homme, autonome pendant au moins 12 heures, pour permettre de résoudre les problèmes techniques ci-dessus exposés en vue d'utiliser l'hélicoptère de nuit comme de jour.

La présente invention s'applique également à de nombreux domaines autres que celui des secours. Par exemple, il pourrait s'agir de l'intervention rapide des forces de l'ordre en campagne ou en ville lors d'une éventuelle prise d'otage de nuit. On peut également envisager l'utilisation d'une noria d'hélicoptères en cas de « Plan Catastrophe » après, par exemple, l'explosion d'un site chimique en zone urbaine et de nuit. L'utilisation du dispositif conforme à la présente invention permettrait d'ailleurs de répondre aux nouvelles réglementations en vigueur imposant à chaque préfecture de département français de prévoir l'arrivée massive de blessés vers des hôpitaux:

Plus précisément, la présente invention concerne un procédé et un dispositif pour localiser et baliser toute surface ou aire de pose choisie pour une intervention de nuit ou par mauvais temps d'au moins une équipe aéroportée et notamment héliportée réalisant notamment une ou des opérations de secours, coopérant avec au moins une personne intervenant au sol et se trouvant sur ladite surface ou aire de pose choisie, afin de permettre l'atterrissage et/ou le décollage, rapide et sûr, de tous types d'aéronefs et notamment d'hélicoptères, transportant la ou lesdites équipes aéroportées et notamment héliportées.

Le procédé conforme à l'invention, tel que défini par les caractéristiques de la revendication 1, permet à ladite équipe aéroportée et notamment héliportée, après déploiement, mise en place et allumage d'un matériel par ladite au moins une personne intervenant au sol, de repérer, de localiser, d'approcher et de survoler toute surface ou aire de pose choisie, par une localisation visuelle et un balisage autonome en énergie provoquant un changement lumineux depuis l'aéronef lorsqu'il passe à la verticale de ce balisage, afin d'atterrir et/ou de re-décoller en toute fiabilité sur l'aire de pose.

Le dispositif de mise en oeuvre conforme à l'invention, tel que défini par les caractéristiques de la revendication 5, comporte deux caissons étanches, facilement portables par ladite au moins une personne intervenant au sol et destinés à êtres disposés sur ladite surface ou aire de pose choisie, le volume intérieur desdits caissons étant destiné à loger, maintenir et permettre l'extraction en toute fiabilité du matériel constituant ledit dispositif nécessaire à ladite intervention en vue de son montage rapide et efficace, ledit matériel étant constitué de deux unités respectivement disposées dans chacun desdits caissons, à savoir :
- une première unité, dite de localisation visuelle de ladite surface ou aire de pose choisie, comprenant au moins une lampe à éclats successifs blancs, relié à un boîtier générateur de courant haute fréquence, ladite première unité étant, après mise en place, visible en vol d'une distance supérieure à quarante kilomètres par le pilote de l'aéronef et notamment de l'hélicoptère transportant la ou lesdites équipes d'interventions aéroportées et notamment héliportées,
- une deuxième unité, dite de balisage, de ladite surface ou aire de pose choisie de la ou desdites équipes aéroportées et notamment héliportées, comprenant au moins cinq balises lumineuses indépendantes, chaque balise étant autonome en énergie électrique et munie d'un cône optique concentrant au moins deux faisceaux de lumière selon deux intervalles angulaires non sécants, un premier intervalle s'élevant à partir du sol et un deuxième concentré autour d'un axe dit vertical perpendiculaire au sol, et des éléments d'un kit permettant le montage instantané d'une manche à air complète et de son système d'éclairage autonome, ladite deuxième unité assurant, après mise en place, un balisage de ladite surface ou aire de pose choisie, compatible avec tout système de vision difficile et notamment des jumelles de vision nocturne.

Les caissons étanches se présentent sous forme de valises réalisées en résine de copolymère polypropylène et sont équipés de dispositifs d'ouverture et de fermeture rapide à encliquetage et munis de valves de dépressurisation.

Le poids du premier caisson ne dépasse pas dix kilogrammes et son encombrement est réduit de manière à pouvoir être porté à l'aide d'une poignée par une seule personne.

L'intérieur dudit premier caisson est revêtu d'un capitonnage alvéolaire en plastazote ou tout autre matière appropriée, dans lequel sont ménagées des cellules de compartimentage, permettant de loger, de maintenir de façon fiable et de retirer rapidement le matériel constituant ladite première unité de localisation visuelle.

Ladite première unité de localisation visuelle logée dans ledit premier caisson est constituée d'un module de piles électriques au lithium de trente-cinq ampères, d'un boîtier générateur de courant haute fréquence, d'un feu à quatre éclats successifs, d'un système de mise en marche et d'arrêt par télécommande, d'un bouton de commande manuelle Marche / Arrêt, de câblages et de raccords de connexion électrique rapide reliant ces divers éléments entre eux.

Le feu à quatre éclats successifs est un feu à quatre éclats successifs blancs de très haute puissance, monté sur une ventouse mécanique, ou sur tout autre support approprié, permettant son adaptation instantanée sur le dessus du caisson refermé après la sortie dudit feu. Il est alimenté par ledit module de piles électriques au lithium permettant son utilisation continue pendant de plus de douze heures.

En variante, une prise d'allume cigare d'un véhicule au sol fournissant du courant électrique d'une tension de douze volts ou de vingt-quatre volts ou un deuxième module de piles électriques au lithium en énergie de secours est prévu pour l'alimentation du boîtier générateur de courant haute fréquence.

Ledit premier caisson est destiné à être mis en place à cent mètres au moins en amont de ladite surface ou aire de pose choisie afin de ne pas gêner le pilote d'aéronef et notamment d'hélicoptère, transportant la ou lesdites équipes aéroportées et notamment héliportées, dans la dernière phase de l'atterrissage. Il est volontairement séparé de l'unité de balisage afin de pouvoir être mis en place, par exemple sur le sommet d'un plateau alors que les secours ont lieu au fond d'une vallée. Ceci permet au pilote d'un aéronef et notamment d'un hélicoptère transportant la ou lesdites équipes aéroportées et notamment héliportées, d'approcher du lieu de secours en survolant le plateau en direction du feu à quatre éclats successifs blancs et de découvrir ladite surface ou aire de pose choisie dûment balisée dans la vallée après être passé à la verticale dudit feu à quatre éclats successifs blancs.

Ladite seconde unité de balisage logée dans ledit second caisson étanche ne dépasse pas un poids de vingt kilogrammes et son encombrement est tel qu'il peut être porté d'une main par une seule personne.

Ledit second caisson est muni, comme le premier caisson, d'un dispositif d'ouverture et de fermeture rapides à encliquetage et de valve de dépressurisation.

Ledit second caisson présente un fond revêtu d'un capitonnage alvéolaire à deux étages en plastazote ou tout autre matière appropriée, dans lequel sont ménagées des cellules de compartimentage, permettant de loger, de maintenir de façon fiable et d'extraire rapidement le matériel constituant la seconde unité dite de balisage de ladite surface ou aire de pose choisie pour l'intervention de la ou desdites équipes aéroportées et notamment héliportées.

Ladite seconde unité dite de balisage comprend au moins cinq balises indépendantes et autonomes en énergie électrique destinées à générer au moins cinq points lumineux fixes au sol après leur mise en place.

Le corps des dites balises renferme un boîtier de dix piles électriques de type standard (AA), sa forme, dans la partie conique inférieure, est calculée pour renvoyer une partie de la lumière vers le bas afin de créer un halo de lumière au sol donnant au pilote un effet de plan d'horizon, et sa hauteur est telle qu'elle permette de ménager une zone éclairante située au-dessus des herbes au sol ou autres obstacles naturels au sol.

Un boîtier récepteur d'émissions radio de la télécommande est inséré à l'intérieur du corps des dites balises pour permettre à ladite au moins une personne intervenant au sol d'allumer ou d'éteindre à distance les dites balises et d'en modifier l'intensité d'éclairage sans se déplacer et sans pénétrer dans la zone de sécurité d'évolution au sol de l'aéronef et notamment de l'hélicoptère, à l'aide d'une télécommande contenue dans ledit second caisson.

En variante, un récepteur pourrait directement être commandé par le pilote d'aéronef et notamment d'hélicoptère, transportant la ou lesdites équipes aéroportées et notamment héliportées, grâce à la radio de celui-ci.

L'éclairage généré par lesdites balises est une lumière dite « lumière froide » obtenue à l'aide de diodes LED générant une lumière de grande intensité tout en bénéficiant d'une consommation extrêmement réduite permettant ainsi d'assurer un éclairage de plus de douze heures à pleine puissance.

Le circuit électronique supportant les diodes LED est conçu de manière à pouvoir utiliser les balises soit à l'oeil nu, soit avec des jumelles de vision nocturne, soit en infrarouge pour des applications militaires.

La lumière émise par lesdites balises est une lumière blanche émise sous un angle compris entre zéro degré de référence horizontale et plus trente-cinq degrés dans le plan vertical ce qui représente l'angle sur lequel un aéronef et notamment un hélicoptère, arrive depuis le lointain.

Un jeu de cônes optiques concentre un rayon de lumière bleu vers le haut sous un angle de trente-cinq degrés autour de l'axe vertical desdites balises, permettant ainsi à au moins un pilote d'aéronef et notamment d'hélicoptère, transportant la ou lesdites équipes aéroportées et notamment héliportées, d'approcher d'un Y constitué de cinq points blancs qui deviennent bleus lorsque son aéronef et notamment son hélicoptère passe à la verticale dudit Y, ce changement de couleur du blanc vers le bleu confirmant au pilote de l'aéronef et notamment de l'hélicoptère qu'il se trouve bien au-dessus de ladite surface ou aire de pose choisie qui lui a été préparée par ladite au moins une personne intervenant au sol.

Cette disposition permet également audit pilote de déterminer immédiatement, lors de son passage vertical, l'axe et le sens d'approche de sécurité préalablement définis par ladite au moins une personne intervenant au sol après qu'elle se soit assurée de l'absence d'obstacles environnants et qu'elle ait pris en compte les informations de vent sur la surface ou l'aire de pose choisie, ces deux opérations étant impérativement effectuées avant à la mise en place dudit dispositif.

La télécommande et/ou commande manuelle desdites balises permet d'obtenir divers niveaux de puissance d'éclairage en fonction des équipements de vision nocturne du pilote et des niveaux de nuit rencontrés lors de l'approche.

Avec la télécommande, le changement de ces divers niveaux est obtenu par de simples impulsions exercées sur le bouton prévu à cet effet ou, en variante, par la radio de l'aéronef et notamment de l'hélicoptère.

Avec la commande manuelle de sécurité, le changement de ces divers niveaux est obtenu en actionnant manuellement un bouton situé sur le corps de chaque balise.

Lesdites balises sont étanches à la pluie et à la poussière provoquée par le souffle d'un aéronef et notamment d'un hélicoptère.

Ladite seconde unité comporte également sous forme d'un kit contenu dans ledit second caisson une manche à air munie d'un système d'éclairage autonome et un mat emboîtable permettant sa mise en place rapide afin de donner au pilote de l'aéronef notamment de l'hélicoptère, la ou les informations de vent sur ladite surface ou aire de pose choisie.

Ledit mât est constitué de sections cylindriques ou tubes, emboîtables très rapidement, en fibre de carbone résistant au souffle sans risquer de passer, par exemple, en s'envolant, dans les pales d'un aéronef, et hisse, après montage, ladite manche à air à plus de 4 mètres au-dessus du sol.

En variante, ledit mât peut également être fixé à un piquet en inox enfoncé dans le sol en cas d'absence de véhicule sur ladite surface ou aire de pose choisie. En variante, ledit mât peut être fixé sur tout véhicule disponible à l'aide d'une ventouse mécanique conçue à cet effet.

Ladite manche à air est éclairée de manière autonome par une lampe autonome étanche constituée d'un groupe de lampes LED qui lui assure une autonomie d'éclairage de plus de douze heures en lumière dite «lumière froide».

D'autres caractéristiques de l'invention apparaîtront au cours de la description détaillée qui suit faite en référence aux figures annexée qui représentent respectivement :

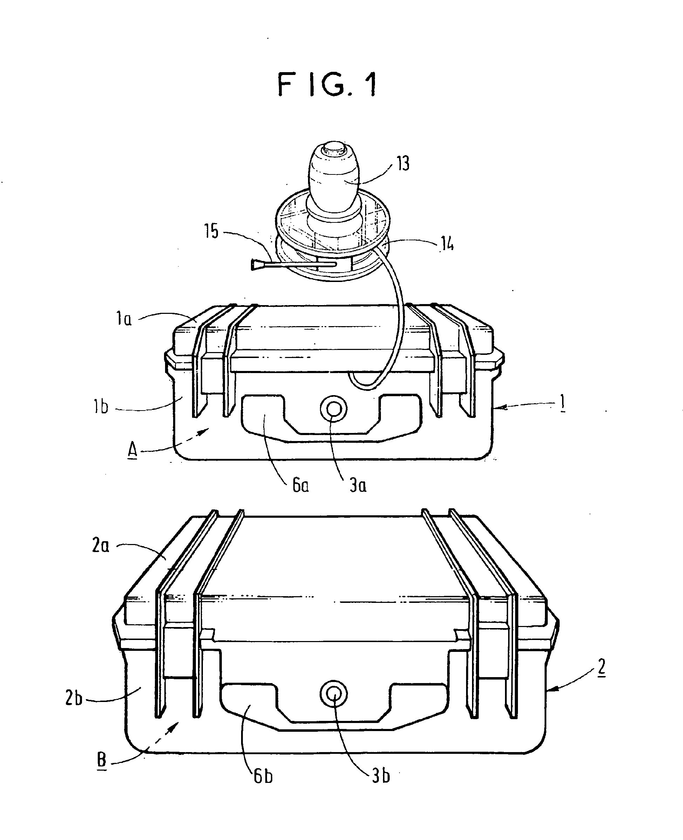

- la figure 1, une vue en perspective les deux caissons contenants respectivement lesdites première et seconde unités de localisation visuelle et de balisage. Le premier et le second caisson sont représentés fermés, le feu à quatre éclats successifs contenu à l'intérieur du premier caisson étant représenté à l'extérieur afin d'illustrer sa ventouse mécanique de fixation ;

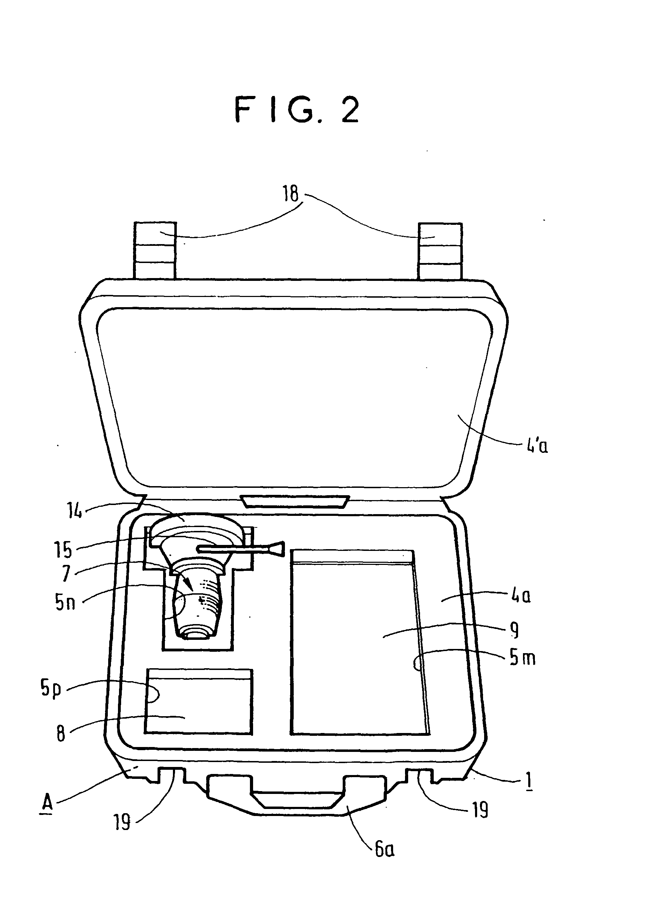

- la figure 2, une vue en perspective du premier caisson ouvert montrant la disposition des éléments constituant la première unité de localisation visuelle, à savoir le feu à quatre éclats successifs blancs, le boîtier générateur de courant haute fréquence et le module de piles électriques au lithium alimentant ledit boîtier ;

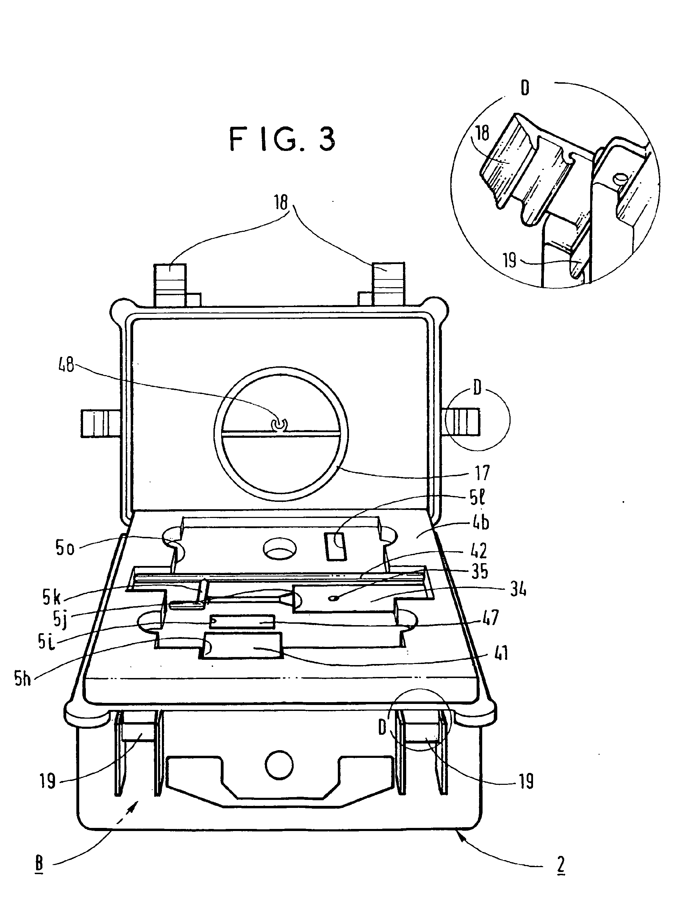

- la figure 3, une vue en perspective du deuxième caisson, celui-ci étant représenté ouvert pour montrer, dans leur cellule de compartimentage, les éléments contenus dans l'étage supérieur du capitonnage alvéolaire à savoir la manche à air, le boîtier du récepteur G.P.S portable, la lampe de la manche à air, la télécommande des cinq balises, le piquet en inox de fixation au sol du mât de la manche et la lampe frontale de l'opérateur au sol ;

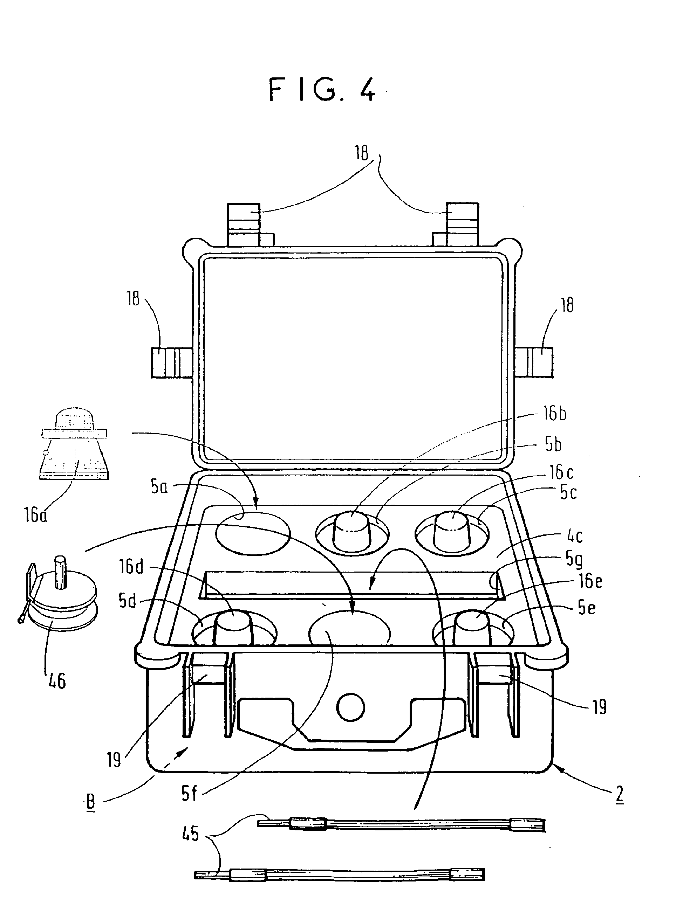

- la figure 4, une vue en perspective du deuxième caisson, celui-ci étant représenté ouvert pour montrer, dans leur alvéole, les éléments contenus dans l'étage inférieur du capitonnage, à savoir, les cinq balises, la ventouse du mât de la manche à air et les tubes du mât de la manche à air ;

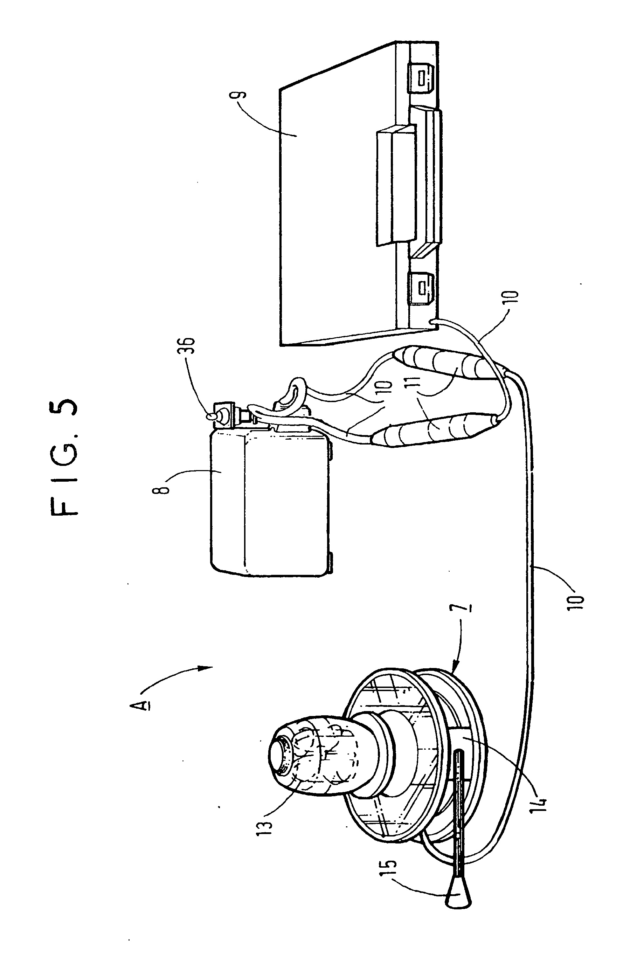

- la figure 5, une vue en perspective détaillée des éléments constituant l'unité de localisation visuelle (A) contenue dans le premier caisson ;

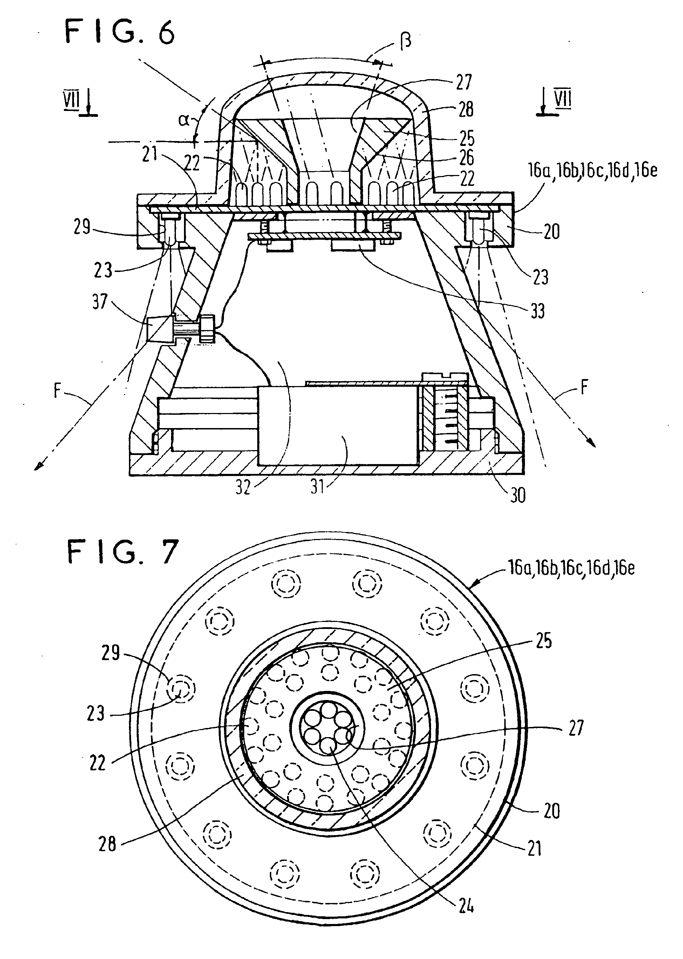

- les figures 6 et 7, respectivement des vues en coupe et de dessus de l'une desdites balises lumineuses conformes à l'invention contenues dans le second caisson contenant l'unité de balisage illustrant en outre les différentes zones de projection des différents faisceaux de lumière émis par ladite balise ;

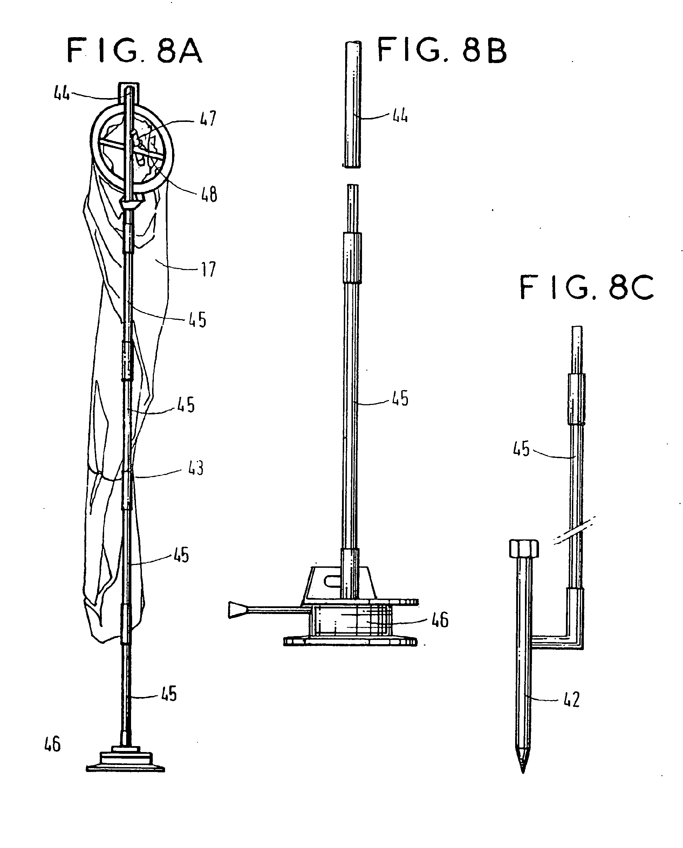

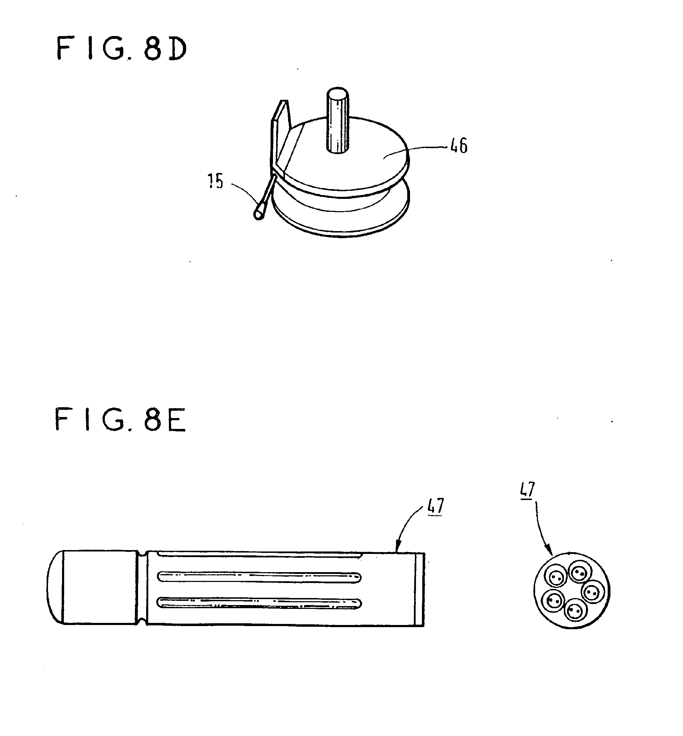

- les figures 8a à 8e, des vues en perspective des divers éléments constitutifs du kit de la manche à air, y compris de la manche à air assemblée, de la ventouse mécanique, du piquet en inox et de la lampe autonome ; et

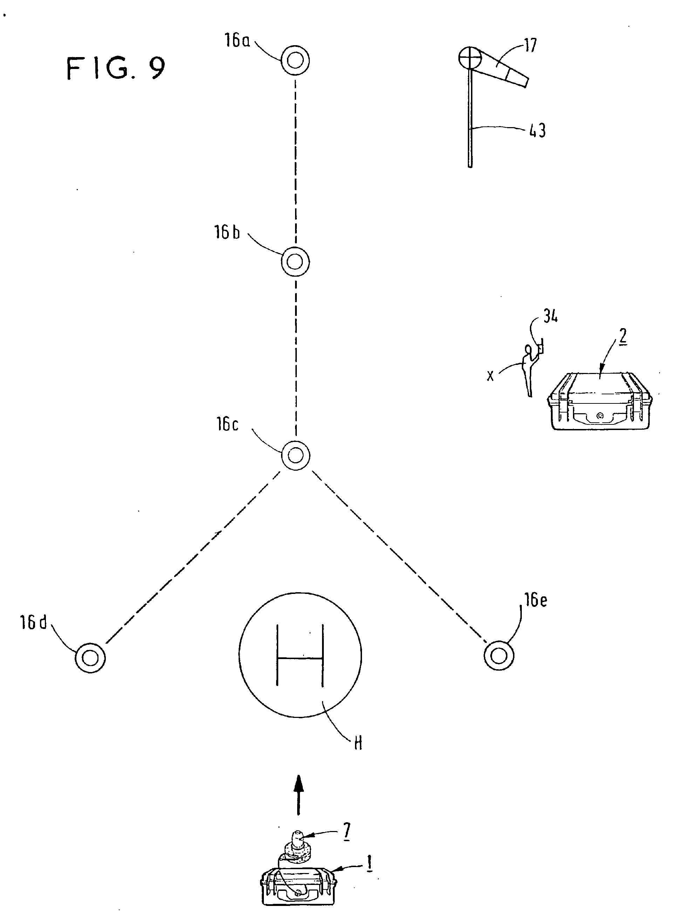

- la figure 9, une vue schématique du principe de disposition au sol du dispositif illustrant la surface ou l'aire de pose choisie dûment localisée et balisée à l'aide du dispositif conforme à l'invention.

Le dispositif conforme à la présente invention est essentiellement destiné, comme cela a été indiqué dans l'introduction de la présente demande, à localiser et baliser toute surface ou aire de pose choisie (H) pour au moins une intervention, de nuit ou par mauvais temps, d'au moins une équipe aéroportée et notamment héliportée, réalisant notamment une ou des opérations de secours, coopérant avec au moins une personne intervenant au sol (x) munie dudit dispositif et se trouvant sur ladite surface ou aire de pose choisie (H), afin de permettre l'atterrissage et/ou le décollage, rapide et sûr, de tous types d'aéronefs et notamment d'hélicoptères, transportant la ou lesdites équipes aéroportées et notamment héliportées.

Comme le montre la figure 1, le dispositif conforme à l'invention est essentiellement constitué de deux caissons 1 et 2 se présentant sous forme de valises étanches, en résine de copolymère polypropylène, destinées à contenir l'unité de localisation visuelle A et d'autre part l'unité de balisage B.

Ces deux caissons ou valises 1 et 2 ci-après dénommés caissons ou valises sont munis de poignées de transport 6a et 6b et sont portables par une seule personne. Des valves de dépressurisation 3a et 3b permettent d'équilibrer la pression interne de la valise avec la pression atmosphérique externe afin de permettre leur ouverture en dépit les variations de pression atmosphérique quotidiennes.

Les deux caissons 1 et 2 sont équipés de dispositifs d'ouverture et de fermeture rapides à encliquetage 18 et 19. Comme le montre le détail de la figure 3, des taquets d'encliquetage 18 sont ménagés dans les couvercles 1a et 2a de chaque caisson et viennent s'encastrer dans les rainures correspondantes 19 prévues à cet effet dans les fonds 1b et 2b desdits caissons 1 et 2.

Ledit premier caisson 1 conforme à la norme MIL-STT4150, est destiné à contenir l'unité de localisation visuelle A, le second caisson 2, conforme à la norme MIL-STT4150, renfermant l'unité de balisage B.

Les deux caissons 1 et 2 sont revêtus d'un capitonnage alvéolaire 4a, 4'a, 4b et 4c ménageant respectivement des compartiments 5a, 5b, 5c, 5d, 5 e, 5f, 5g, 5h, 5i, 5j, 5k, 51, 5m, 5n, 5o, 5p formant un certain nombre de cellules dans les caissons 1 et 2, destinés à contenir, à maintenir de façon fiable et à extraire de façon rapide les divers éléments constituant l'unité de localisation visuelle A et l'unité de balisage B. Comme le montrent les figures 3 et 4, le second caisson 2 comporte en fait deux étages de capitonnage destinés à venir se superposer.

Le premier caisson 1 une fois fermé et contenant l'unité de localisation visuelle A aura un poids ne dépassant pas 10 kilogrammes et son encombrement sera suffisamment réduit pour pouvoir être transporté aisément d'une seule main par une seule personne à l'aide de la poignée de transport 6a. De même, le second caisson 2 muni des divers éléments constituant l'unité de balisage B aura un poids ne dépassant pas 20 kilogrammes et son encombrement lui permettra également d'être soulevé d'une seule main par une seule personne grâce à la poignée de transport 6b.

Le premier caisson 1 est destiné à recevoir les éléments constituant l'unité de localisation visuelle A qui pourra être perçue par le pilote, devant se poser sur la surface ou aire choisie H, depuis une distance supérieure à 40 km de nuit.

Comme le montrent les figures 2 et 5, le premier caisson 1 ou valise 1 renferme un feu à quatre éclats successifs blancs 7, de très forte puissance, relié à un boîtier générateur de courant haute fréquence 8 alimenté par un module de piles électriques au lithium 9 de douze volts et de trente-cinq ampères. Ces trois éléments sont reliés par des câblages électriques 10 raccordés à un interrupteur marche/arrêt 36 et des raccords de connexion électrique rapide du type raccord CANON 11.

Le feu à quatre éclats successifs blancs 7 est constitué d'une lampe à éclats non représentée montée dans un globe en plexiglas transparent étanche 13 qui comporte des facettes diffusant la lumière dans tous les azimuts selon le principe de la lentille de Fresnel. Le feu à quatre éclats successifs blancs 7 est fixé sur une ventouse mécanique 14.

Une fois sorti du caisson 1, ladite ventouse 14 supportant le feu à quatre éclats successifs blancs 7 est destinée à être montée sur le couvercle 1 a du premier caisson 1. Le montage de la ventouse sur le couvercle 1a du premier caisson 1 se fait simplement en posant la ventouse sur celui-ci puis en basculant le levier 15 qui plaque la ventouse par aspiration sur le couvercle la, voir figures 1 et 5.

Le feu à quatre éclats successifs blancs 7 représenté sur les figures 1, 2, et 5, génère des groupes d'au moins quatre éclats successifs rapprochés et est destiné à attirer l'oeil d'un pilote d'aéronef en vol et notamment d'hélicoptère, transportant la ou lesdites équipes aéroportées et notamment héliportées, depuis une distance de plus de quarante kilomètres, de nuit, afin de le diriger vers la surface ou l'aire de pose choisie H pour l'intervention. Ce feu se remarque même s'il est placé dans un milieu urbain éctairé.

Cette première unité de localisation visuelle A munie du module de piles électriques au lithium 9, de douze volts et de trente-cinq ampères, a une autonomie de plus de douze heures de fonctionnement. En variante, l'alvéole 5m prévu dans le capitonnage alvéolaire 4a du fond 1b du premier caisson 1 pourra recevoir un deuxième module, identique au premier, en énergie de secours non représenté.

Ledit module de piles électriques au lithium 9 alimente en courant électrique continu d'une tension de douze volts un boîtier électronique 8. Ledit boîtier électronique 8 transforme ledit courant continu en courant haute fréquence et le décharge dans le feu à quatre éclats successifs blancs 7 par groupes d'au moins quatre éclats successifs.

En cours d'utilisation dudit premier caisson 1, le couvercle 1a sur lequel repose ledit feu à quatre éclats successifs blancs 7 est de préférence refermé comme le montre la figure 1 pour protéger des intempéries les éléments électroniques 8 et 9 qu'il contient.

Ce premier caisson 1 contenant l'unité de localisation visuelle A est destiné à être mis en place à cent mètres au moins en amont de la surface ou aire de pose choisie H afin de ne pas gêner le pilote d'aéronef et notamment d'hélicoptère, transportant la ou lesdites équipes aéroportées et notamment héliportées, dans la dernière phase de l'atterrissage comme le montre la figure 9.

Ledit premier caisson 1 avec son unité de localisation visuelle A déployée est volontairement séparé de l'unité de balisage B et donc du second caisson 2 afin de pouvoir être mis en place par exemple sur le sommet d'un plateau alors que les secours ont lieu au fond d'une vallée. Ceci permet au pilote d'un aéronef et notamment d'un hélicoptère transportant la ou lesdites équipes aéroportées et notamment héliportées, d'approcher du lieu de secours en survolant le plateau en direction du feu à quatre éclats successifs blancs 7 et de découvrir ladite surface ou aire de pose choisie H dûment balisée dans la vallée après être passé à la verticale dudit feu à quatre éclats successifs blancs 7.

Comme le montrent les figures 3 et 4, la deuxième unité dite de balisage B de ladite surface ou aire de pose H choisie pour l'intervention desdites équipes aéroportées et notamment héliportées, est logée dans le second caisson 2. À cet effet, ledit second caisson 2 comprend deux étages de capitonnage alvéolaire 4b et 4c. L'étage supérieur 4b supporte la manche à air 17 destinée à venir reposer dans son alvéole 5o entre le couvercle 2a et l'étage supérieur du capitonnage 4b du fond 2b du second caisson 2. La lampe de la manche à air 47 est logée dans l'alvéole 5i du capitonnage 4b prévu à cet effet. Dans ce capitonnage alvéolaire 4b sont également logés dans des cellules de compartimentage, ci-après dénommées cellules ou alvéoles, prévues à cet effet, la télécommande 34 des balises 16a à 16e, le piquet en inox 42 de fixation au sol du mât de la manche à air 17, la lampe frontale 40 de l'opérateur au sol x, le boîtier récepteur G.P.S portable 41 ainsi qu'un second moyen de relevé GPS non représenté des coordonnées géographiques précises de ladite surface ou aire de pose choisie qui seront transmises par radio ou par téléphone vers lesdites équipes aéroportées et notamment héliportées.

Dans le cas présent, on a représenté les cinq balises' lumineuses 16a à 16e logées respectivement dans les cellules 5a, 5b, 5c, 5d, 5 e de l'étage inférieur 4c du fond 2b du second caisson 2. Dans ce capitonnage alvéolaire inférieur 4c sont également logés la ventouse 46, les tubes 44 et 45 constituant le mât 43 de fixation de la manche à air 17.

Les cinq balises 16a à 16e contenues dans ladite seconde unité 2 dite de balisage B et représentées sur la figure 6 et 7 ont été conçues et mises au point conformément à la présente invention pour répondre aux impératifs exposes dans l'introduction de la présente demande.

Lesdites balises 16a à 16e sont d'un poids et d'une forme qui leur permet de rester en position au sol afin de ne pas être déplacées par le souffle d'un aéronef et notamment d'un hélicoptère qui les survole au ras du sol.

Pour ce faire, elles doivent être fabriquées avec une haute précision tout en étant étanches à la pluie, à la boue et aux projections de poussières provoquées par les aéronefs et notamment les hélicoptères.

Comme le montrent les figures 6 et 7, le corps 20 de chaque balise est réalisé en aluminium chromé et poli. Ce corps 20 est d'une hauteur d'au moins cent cinq millimètres ce qui permet de dégager la zone éclairante située au sommet dudit corps des éventuelles herbes au sol ou d'autres obstacles naturels au sol sur la surface ou l'aire de pose à baliser choisie.

Ce corps 20 supporte une platine électronique 21 sur laquelle est imprimé un circuit électronique sur lequel sont disposées et alimentées en énergie électrique cinquante-quatre diodes LED 22 et 24 dirigées vers le haut, et douze diodes LED 23 dirigées vers le bas.

Conformément à l'invention lesdites diodes LED 22, 23 et 24 sont conçues afin d'obtenir une lumière dite « lumière froide » générant une lumière de grande intensité tout en bénéficiant d'une consommation extrêmement réduite ce qui permet à chaque balise d'assurer un éclairage de plus de douze heures à pleine puissance à l'aide de dix plies neuves. La durée de vie moyenne desdites diodes est de ce fait de plus de deux cent mille heures en fonctionnement en permettant ainsi d'obtenir, grâce à cette technologie, une source d'éclairage dont la fiabilité est unique à l'heure actuelle.

En variante, les diodes LED 22, 23 et 24 pourraient être prévues pour émettre des rayons infrarouges invisibles à l'oeil nu pour s'adapter à des applications militaires.

Conformément à l'invention lesdites diodes 22 dirigées vers le haut émettent une lumière de couleur blanche et sont situées autour et à l'extérieur du cône optique 25 chromé qui renvoie ladite lumière verticale sous un angle alpha α compris entre zéro degrés en partant du plan horizontal jusqu'à trente-cinq degrés vers le haut voir figure 6. Ce dit cône otique 25 coiffe l'ensemble des diodes LED 22 dirigées vers le haut qui émettent une lumière blanche afin de ne percevoir qu'une lumière bleue en passant à la verticale de ladite balise.

Lesdites diodes LED 22 dirigées vers le haut comprennent des diodes blanches 22 au nombre de quarante-huit et six diodes bleues 24 qui émettent une lumière de couleur bleue et qui sont situées à l'intérieur de l'orifice central 27 du cône optique 25. Ces diodes bleues 24 émettent une lumière bleue dirigée suivant un angle Bêta β de trente-cinq degrés orienté autour de l'axe vertical de la balise.

Ledit cône optique 25 monté sur la platine 21 est conçu de manière à renvoyer la lumière et, pour ce faire, est réalisé en inox chromé dont les faces 26 sont polies. L'orifice central 27 dudit cône optique 25 laisse passer vers la verticale le faisceau de lumière bleue émis par les six diodes bleues 24 situé au coeur dudit orifice 27.

Ladite platine 21 est coiffée d'un dôme de protection 28 étanche réalisé en plexiglas de quatre millimètres d'épaisseur protégeant l'ensemble des éléments constitutifs des balises 16a à 16e contre les projections de pluie, de poussières et de boue provoquées par le souffle de tous types d'aéronefs et notamment d'hélicoptères.

À une faible distance de la périphérie extérieure de la platine 21 sont montées, dans des perçages appropriés 29, à égale distance entre elles, douze diodes LED 23 de couleur blanche dirigées vers le bas.

La lumière blanche émise vers le bas par lesdites douze diodes LED 23 est réfléchie sur la partie basse du corps conique 20 prévu à cet effet et poli de manière à renvoyer ladite lumière au sol autour de ladite balise comme le montre la flèche F afin de créer un halo de lumière au sol donnant au pilote de l'aéronef et notamment de l'hélicoptère transportant la ou lesdites équipes aéroportées et notamment héliportées, un effet de plan d'horizon constitué par les cinq halos blancs au sol générés par lesdites cinq balises 16a à 16e installées au sol.

Le fond desdites balises 16a à 16e est muni d'un couvercle étanche 30 à ouverture rapide, grâce à un filet rompu non représenté, qui permet d'ouvrir ce couvercle par un simple quart de tour en le dévissant afin de procéder au changement des piles électriques. Ce couvercle 30, supporte le boîtier 31 de dix plies de type standard AA LR6. Le choix de ce type de piles électriques est dicté par un impératif de sécurité et permet aux équipes de secours mettant en oeuvre la présente invention de trouver facilement des piles électriques de rechange, dans le commerce.

Le corps creux 32 desdites balises 16a à 16e, renferme également un boîtier de réception 33 des émissions radio de la télécommande 34.

Ladite télécommande 34 permet à ladite au moins une personne intervenant au sol x qui installe l'unité de balisage B conforme à l'invention d'allumer ou d'éteindre à distance lesdites balises 16a à 16e ; elle permet également après allumage, de passer d'un niveau d'éclairage à l'autre à chaque brève impulsion sur le bouton de commande 35, elle permet également d'allumer ou d'éteindre à distance le feu à quatre éclats successifs blancs 7 de l'unité de localisation visuelle A.

Après allumage, lesdites cinq balises 16a à 16e se trouvent sur la position de lumière la plus faible qui permet une approche à l'aide de jumelles de vision nocturne par nuit sombre. Cette position d'éclairage est appelée niveau 1.

Une brève impulsion sur le bouton 35 de la télécommande 34 augmente le niveau de lumière desdites balises 16a à 16e afin de permettre une approche sous jumelles de vision nocturne par nuit plus claire. Cette position d'éclairage est appelée niveau 2.

Une autre brève impulsion sur le bouton 35 de la télécommande 34 augmente le niveau de lumière desdites balises 16a à 16e afin de permettre une approche sous jumelles de vision nocturne par nuit très claire avec pleine lune. Cette position d'éclairage est appelée niveau 3.

Enfin, une autre brève impulsion sur le bouton 35 de la télécommande 34 augmente le niveau de lumière desdites balises 16a à 16e au niveau le plus fort afin de permettre une approche à l'oeil nu de nuit sans aucun équipement de vision nocturne. Cette position d'éclairage est appelée niveau 4.

Une autre brève impulsion sur le bouton 35 de la télécommande 34 ramène le niveau d'éclairage à la position appelée niveau 1 et ainsi de suite à chaque brève impulsion.

Le boîtier de réception 33 des balises 16a à 16e permet également la commande à distance de l'allumage ou de l'extinction simultanée des cinq balises 16a à 16e.

En position éteinte, un seul appui, si bref soit-il, sur le bouton 35 provoque une émission de la télécommande 34 qui commande l'allumage instantané et simultané desdites cinq balises 16a à 16 e tandis qu'en position allumée, un appui de plus de trois secondes sur le bouton 35 provoque une émission de plus de trois secondes de la télécommande 34 qui commande l'extinction simultanée desdites cinq balises 16a à 16'e.

Ce délai de commande de plus de trois secondes pour l'extinction à été impose pour des raisons de sécurité afin d'éviter toute extinction intempestive lors du réglage des différents niveaux de puissance d'éclairage desdites balises 16a à 16e lorsqu'un aéronef et notamment un hélicoptère se trouve en phase d'approche sur ledit dispositif déployé et mis en marche.

Conformément au procédé de l'invention, ladite au moins une personne intervenant au sol x munie du dispositif contenu dans les deux caissons 1 et 2 tels que décrit ci-dessus, après avoir choisi toute surface ou aire de pose H, pourra prendre contact avec une ou plusieurs équipes aéroportées et notamment héliportées, chargées de la rejoindre en vue de permettre notamment les opérations de secours envisagées.

Pour ce faire ladite au moins une personne intervenant au sol x devra localiser et baliser ladite surface ou aire de pose choisie H afin de permettre l'atterrissage d'au moins un aéronef et notamment d'un hélicoptère transportant la ou lesdites équipes aéroportées et notamment héliportées.

Les deux caissons étanches 1 et 2 étant portables par une seule personne, ladite au moins une personne intervenant au sol x pourra facilement acheminer l'ensemble des éléments contenus dans ceux-ci sur ladite surface ou aire de pose choisie.

Une fois rendue sur les lieux, la première unité contenue dans le premier caisson 1 sera mise en place à une centaine de mètres en amont de ladite surface ou aire de pose choisie H afin de ne pas gêner le pilote d'aéronef et notamment d'hélicoptère, transportant la ou lesdites équipes aéroportées et notamment héliportées, dans sa dernière phase d'atterrissage comme le montre la figure 9.

Après ouverture de ce premier caisson 1, le feu à quatre éclats successifs blancs 7 sera très rapidement monté sur le couvercle 1a dudit caisson à l'aide de la ventouse mécanique 14. Comme cela a été indiqué précédemment, le montage de cette ventouse 14 sur le dessus du premier caisson 1 se fait très simplement en posant ladite ventouse sur le couvercle 1a du premier caisson 1 puis en basculant le levier 15 qui plaque la ventouse 14 en aspiration sur celui-ci.

Cette opération étant réalisée et le bouton de commande 36 du feu à quatre éclats successifs blancs 7 étant placé sur Marche, le premier caisson 1 peut être refermé pour protéger les éléments électroniques qu'il contient et notamment le module de piles électriques au lithium 9 alimentant le boîtier électronique 8 transformant le courant continu en courant haute fréquence pour le décharger vers le feu à quatre éclats successifs blancs 7.

Il a été préalablement précisé que ce feu à quatre éclats successifs blancs 7 se remarque même si il est placé dans un milieu urbain éclairé, sa lumière étant diffusée dans tous les azimuts par groupes de quatre éclats successifs rapprochés de manière à attirer l'oeil du pilote d'aéronef et notamment d'hélicoptère, transportant la ou lesdites équipes aéroportées et notamment héliportées.

Après mise en place de la première unité dite de localisation visuelle A, ladite au moins une personne intervenant au sol x va sortir très rapidement et très facilement les éléments constituant la seconde unité 2 dite de balisage B.

Pour ce faire, les cinq balises 16a à 16 e seront disposées en aval de la surface ou aire de pose choisie H comme le montre la figure 9. En fait, les trois premières balises 16a, 16b, 16c seront alignées en étant respectivement séparées d'une distance de 25 mètres, les balises 16d et 16 e étant écartées de part et d'autre de la ligne formée par les balises 16a, 16b, 16c d'une distance de 25 mètres en formant un Y matérialisé en pointillé sur la figure 9

Cette disposition assure le balisage de ladite surface ou aire de pose choisie H et permet à au moins un pilote d'aéronef et notamment d'hélicoptère, transportant la ou lesdites équipes aéroportées et notamment héliportées, d'approcher de cinq points blancs qui deviennent bleus lorsque son aéronef et notamment son hélicoptère passe à la verticale de cet Y, ce changement de couleur dudit Y du blanc vers le bleu confirmant au pilote de l'aéronef et notamment de l'hélicoptère, transportant la ou lesdites équipes aéroportées et notamment héliportées, qu'il se trouve bien au-dessus de ladite surface ou aire de pose choisie H qui lui a été préparée par ladite au moins une personne intervenant au sol x sans aucun risque de confusion avec d'autres sources de lumière environnantes. Cette identification étant particulièrement précieuse en milieu urbain éclairé. Cette disposition permet également audit pilote de déterminer immédiatement, lors de son passage vertical, l'axe et le sens d'approche de sécurité préalablement définis par ladite au moins une personne intervenant au sol x après qu'elle se soit assurée de l'absence d'obstacles environnants et qu'elle ait pris en compte les informations de vent sur la surface ou l'aire de pose choisie H, ces deux opérations étant impérativement effectuées avant à la mise en place dudit dispositif.

Comme cela a été écrit précédemment, ladite au moins une personne intervenant au sol x allume ou éteint à distance lesdites balises 16a à 16 e par l'intermédiaire de la télécommande 34 qui, comme cela a été précédemment indiqué, permet de passer d'un niveau d'éclairage à l'autre suivant les impulsions appliquées sur le bouton de commande 35, en faisant ainsi varier la lumière suivant les conditions dans lesquelles se déroule l'intervention pour obtenir soit le niveau 1, soit le niveau 2, soit le niveau 3, soit le niveau 4 ci-dessus indiqués.

Lors de l'ouverture du second caisson 2, ladite au moins une personne intervenant de nuit au sol x s'équipe tout d'abord de la lampe frontale 40 afin de bénéficier d'un éclairage confortable de ses gestes tout en ayant les mains libres puis déloge la manche à air 17 ainsi que les tubes du kit 44 et 45 logés dans l'alvéole 5g du capitonnage alvéolaire 4c du second caisson 2 et le piquet en inox de fixation 42 logés dans le capitonnage alvéolaire supérieur 4b dudit caisson. Les tubes 44 et 45 destinés à constituer le mât 43 de ladite manche à air 17 sont fabriqués en inox et en fibre de carbone pour résister au souffle d'un aéronef et notamment d'un hélicoptère sans risquer de s'envoler et de passer, par exemple, dans les pales de l'appareil. Une fois monté, le mât 43 hisse la manche à air éclairée 17 à quatre mètres au-dessus du sol bien que tous ces éléments constitutifs rentrent dans le faible volume du second caisson 2. Ces tubes 44 et 45 sont aisément emboîtés par ladite au moins une personne intervenant au sol x comme le montre le détail de la figure 8a et le mât 43 peut être fixé à l'aide du piquet en inox 42 destiné à être enfoncé dans le sol en cas d'absence de véhicule sur ladite surface ou aire de pose choisie H pour un secours en montagne par exemple. En variante, ledit mât 43 pourrait également être fixé sur le toit d'un véhicule grâce à la ventouse 46.

Il suffit alors d'éclairer ladite manche à air 17 à l'aide de la lampe autonome étanche 47 qui lui assure une autonomie d'éclairage de plus de douze heures en lumière blanche dite «lumière froide». La présence de ladite manche à air éclairée 17, à quatre mètres au-dessus du sol, permet de donner au pilote dudit aéronef, lors de son passage à la verticale, une idée précise du vent sur ladite surface ou aire de pose choisie H dûment localisée et balisée afin que l'aéronef et notamment l'hélicoptère guidé sur les lieux ne se pose pas dos au vent lorsque celui-ci est fort permettant ainsi de prévenir les risques de décrochage appelés VORTEX.

Ainsi mis en oeuvre, le procédé conforme à l'invention permet donc notamment l'intervention rapide et sure, de nuit ou par mauvais temps, d'une ou de plusieurs équipes aéroportées et notamment héliportées, en leur permettant de se diriger vers une surface ou aire de pose choisie H dûment localisée et balisée par ladite au moins une personne intervenant au sol x munie du dispositif conforme à l'invention dont la mise en place rapide permet un guidage sûr et un atterrissage fiable de la ou desdites équipes aéroportées et notamment héliportées, sur ladite surface ou aire de pose choisie H prévue à cet effet.

Comme on peut le constater, le dispositif ci-dessus décrit permet de résoudre les problèmes exposes dans l'introduction de la présente demande notamment lorsqu'il s'agit d'une intervention de sauvetage où chaque minute gagnée est décisive pour la survie des blessés.

Dans ce cas particulier d'application de l'invention, on peut prévoir, afin d'acheminer les secours au plus vite, que le second caisson 2 renferme un guide GPS donnant par ordre alphabétique les coordonnées GPS de la région concernée.

Ce guide permet de transmettre au pilote d'aéronef et notamment d'hélicoptère, transportant la ou lesdites équipes aéroportées et notamment héliportées, le point GPS précis du lieu où se situe la surface ou l'aire de pose choisie H pour intervenir. Les coordonnées géographiques, précises à quelques mètres près seulement, de ladite surface ou aire de pose choisie H peuvent également être aisément relevées grâce au GPS portable contenu dans le second caisson 2 et transmises au pilote d'aéronef et notamment d'hélicoptère, transportant la ou lesdites équipes aéroportées et notamment héliportées, avant même qu'il ne décolle de sa base. Le pilote d'aéronef et notamment d'hélicoptère, transportant la ou lesdites équipes aéroportées et notamment héliportées, insère lesdites données sur son GPS de bord et peut suivre, dès son décollage, la route la plus courte en ligne droite entre son point de départ et ladite surface ou aire de pose choisie. On s'assure ainsi que la route la plus courte, en distance comme en temps de vol, est précisément suivie pour acheminer les secours.

L'invention n'est pas limitée aux modes de réalisation décrits ci-dessus en détail, mais diverses modifications peuvent y être apportées sans sortir de son cadre. En particulier, le procédé d'intervention n'est pas limité aux opérations de secours et son champ d'application peut s'étendre à beaucoup d'autres interventions aéroportées et notamment héliportées.

De plus, le changement lumineux visible depuis l'aéronef peut être, outre un changement de couleur, passant par exemple du blanc au vert
ou du rouge au bleu, mais également ou alternativement un changement de forme lumineuse par formation d'un faisceau lumineux d'axe vertical inscrit dans un carré, un rectangle ou toute autre découpe spécifique. Une telle forme peut être réalisée à l'aide d'un cône ayant des faces internes 26 formant, en coupe, un rectangle ou un carré ou toute autre forme spécifique non circulaire.

## Revendications

1. Procédé pour localiser et baliser toute surface ou aire de pose choisie (H) pour une intervention de nuit ou par mauvais temps d'au moins une équipe aéroportée et notamment héliportée réalisant notamment une ou des opérations de secours, coopérant avec au moins une personne intervenant au sol (x) se trouvant sur ladite surface ou aire de pose choisie (H), afin de permettre l'atterrissage et/ou le décollage, rapide et sûr, de tous types d'aéronefs et notamment d'hélicoptères, transportant la ou lesdites équipes aéroportées et notamment héliportées, **caractérisé en ce qu'**il permet à ladite équipe aéroportée et notamment héliportée, après déploiement, mise en place et allumage d'un matériel par ladite au moins une personne intervenant au sol (x), de repérer, de localiser, d'approcher et de survoler toute surface ou aire de pose choisie (H), par une localisation visuelle et un balisage formé d'au moins 5 balises' indépendantes et autonomes en énergie, pour provoquer un changement lumineux visible depuis l'aéronef à l'aide du balisage qui émet vers le ciel un faisceau central sensiblement horizontal (α) de lumière concentré verticalement (β) ainsi qu'une lumière de couleur différente, seul le faisceau central étant perçu par le passage de l'aéronef à la verticale de ce balisage, afin d'atterrir et/ou de re-décoller en toute fiabilité sur l'aire de pose.

2. Procédé d'intervention selon la revendication 1, dans lequel ladite au moins une personne intervenant au sol (x), après avoir choisie ladite surface ou aire de pose en vue de l'intervention et relevé ses coordonnées géographiques précises grâce à un récepteur GPS (41) prend contact par tout moyen de communication notamment radio ou téléphonique avec la ou lesdites équipes aéroportées et notamment héliportées, de manière à transmettre immédiatement les coordonnées géographiques précises de ladite surface ou aire de pose choisie (H) à localiser et à baliser en vue d'assurer leur intervention, de nuit ou par mauvais temps, sur celle-ci afin de permettre ladite intervention dans les plus brefs délais.

3. Procédé selon la revendication 2, dans lequel ladite au moins une personne intervenant au sol (x) assure l'acheminement aisé du matériel sur ladite surface ou aire de pose choisie (H) de manière à mettre en place, sur cette dernière, une première unité dite de localisation visuelle (A) et une deuxième unité dite de balisage (B) aux fins d'assurer la localisation visuelle de ladite surface ou aire de pose choisie (H) permettant ainsi une approche sure et un atterrissage fiable de tous types d'aéronefs et notamment d'hélicoptères, transportant la ou lesdites équipes aéroportées et notamment héliportées.

4. Procédé selon l'une quelconque des revendications précédentes, dans lequel le pilote d'aéronef et notamment d'hélicoptère, transportant la ou lesdites équipes aéroportées et notamment héliportées, arrivant à la verticale de la surface ou aire de pose choisie (H) perçoit un changement de la couleur générée par l'unité de balisage disposées en Y (16a à 16e), du blanc vers le bleu, lui confirmant ainsi que son aéronef et notamment son hélicoptère, se trouve bien au-dessus de ladite surface ou aire de pose choisie (H) et lui confirmant également, lors de son passage vertical, l'axe et le sens d'approche de sécurité, lesdits axes et sens d'approche de sécurité ayant été préalablement définis par ladite au moins une personne intervenant au sol (x) après qu'elle se soit assurée de l'absence d'obstacles environnants et qu'elle ait pris en compte les informations de vent sur la surface ou l'aire de pose choisie (H).

5. **Dispositif d'intervention pour la mise en oeuvre du procédé** selon l'une quelconque des revendications précédentes, **caractérisé en ce qu'**il comporte deux caissons étanches (1, 2), facilement portables par ladite au moins une personne intervenant au sol (x) et destinés à êtres disposés sur ladite surface ou aire de pose choisie (H), le volume intérieur desdits caissons (1, 2) étant destiné à loger, maintenir et permettre l'extraction en toute fiabilité du matériel constituant ledit dispositif nécessaire à ladite intervention en vue de son montage rapide et efficace, ledit matériel étant constitué de deux unités respectivement disposées dans chacun desdits caissons (1, 2), à savoir :
- une première unité, dite de localisation visuelle (A), de ladite surface ou aire de pose choisie (H) comprenant au moins une lampe à éclats successifs blancs (7), relié à un boîtier générateur de courant haute fréquence (8), ladite première unité étant, après mise en place, visible en vol d'une distance supérieure à quarante kilomètres par le pilote de l'aéronef et notamment de l'hélicoptère transportant la ou lesdites équipes d'interventions aéroportées et notamment héliportées,
- une deuxième unité, dite de balisage (B), de ladite surface
ou airé de pose choisie (H) de la ou desdites équipes aéroportées et notamment héliportées, comprenant au moins cinq balises lumineuses (16a à 16e) indépendantes, autonomes en énergie électrique et munies d'un jeu de cônes optiques (25) possédant un orifice central (27) pour émettre une lumière orientée autour de l'axe vertical de chaque balise et des faces (26) pour émettre une lumière partant du plan horizontal et selon l'angle (α) formé par ces faces (26), destinées à générer au moins cinq points lumineux fixes au sol après leur mise en place, et des éléments d'un kit (42, 43, 44, 45 et 46) permettant le montage instantané d'une manche à air (17) complète et de son système d'éclairage (47) autonome, la dite deuxième unité assurant, après mise en place, un balisage de ladite surface ou aire de pose choisie (H), compatible avec tout système de vision difficile et notamment des jumelles de vision nocturne.

6. Dispositif d'intervention selon la revendication précédente, dans lequel ladite au moins une personne intervenant au sol (x) assure la localisation visuelle de ladite surface ou aire de pose choisie (H) à l'aide du matériel et en particulier en fixant instantanément une lampe à éclats successifs blancs (7) de très haute puissance à l'aide d'une ventouse mécanique (14) sur tout support approprié et en particulier sur le couvercle (1a) dudit premier caisson (1) du dispositif conforme à l'invention dont il vient de l'extraire, et en l'allumant à l'aide d'un bouton marche/arrêt (36) alimenté par le module de piles électriques au lithium (9) relié au boîtier générateur de courant haute fréquence (8) de manière à permettre au pilote d'aéronef et notamment d'hélicoptère, transportant la ou lesdites équipes aéroportées et notamment héliportées, de localiser visuellement, en vol, le lieu d'intervention depuis une distance supérieure à quarante kilomètres de nuit.

7. Dispositif d'intervention selon la revendication précédente, dans lequel ladite au moins une personne intervenant au sol (x) assure-le balisage de ladite surface ou aire de pose choisie (H) en disposant au moins 5 balises (16a à 16e) étanches à la pluie et à la poussière, indépendantes et autonomes en énergie électrique, de manière à générer au moins cinq points lumineux fixes dessinant un Y au sol, lesdites balises (16a à 16e) générant une lumière dite «lumière froide» de manière à pouvoir être utilisées par le pilote d'aéronef en approche, et notamment d'hélicoptère, transportant la ou lesdites équipes aéroportées et notamment héliportées, soit à l'oeil nu, soit avec des jumelles de vision nocturne, soit en infrarouge pour des applications militaires.

8. Dispositif d'intervention selon la revendication précédente, dans lequel ladite au moins une personne intervenant au sol (x) modifie, par de simples impulsions exercées soit sur le bouton de commande (35) d'une télécommande (34) prévue à cet effet, soit sur le bouton de commande manuelle (37) situé sur le corps de chacune des balises, les niveaux de puissance d'éclairage desdites balises (16a à 16e) en fonction des équipements de vision nocturne du pilote d'aéronef en approche, et notamment d'hélicoptère, transportant la ou lesdites équipes aéroportées et notamment héliportées, et/ou en fonction des différents niveaux de nuit rencontrés lors de l'approche.

9. Dispositif d'intervention selon l'une quelconque des revendications 5 à 8, dans lequel ladite au moins une personne intervenant au sol (x) assure la transmission au pilote de !'aéronef et notamment de l'hélicoptère, transportant la ou les équipes aéroportées et notamment héliportées, des informations relatives au vent en montant très rapidement les sections cylindriques ou tubes (44, 45) du mât emboîtable (43,) surmontés d'une manche à air (17) supportant dans son centre, par tout moyen approprié, un système d'éclairage autonome (47), la fixation dudit mât (43) étant obtenue à l'aide d'un piquet en inox (42) enfoncé dans le sol ou à l'aide d'une ventouse (46) appliquée sur tout support approprié.

10. Dispositif d'intervention selon la revendication 5, dans lequel lesdits caissons étanches (1, 2) se présentent sous forme de caissons ou valises réalisés en résine de copolymère polypropylène et sont équipés de dispositifs d'ouverture et de fermeture rapides à encliquetage (18, 19) et de valves de dépressurisation (3a, 3b).

11. Dispositif d'intervention selon la revendication précédente, dans lequel le poids du premier caisson (1) ne dépasse pas dix kilogrammes et son encombrement est réduit de manière à pouvoir être porté à l'aide d'une poignée de transport 6a par une seule personne.

12. Dispositif d'intervention selon la revendication précédente, dans lequel l'intérieur dudit premier caisson (1) est revêtu d'un capitonnage alvéolaire (4a) en plastazote ou tout autre matière appropriée présentant un fond (1 b) dans lequel sont ménagées des cellules de compartimentage, ci-après dénommées cellules ou alvéoles, permettant de loger, de maintenir de façon fiable et de retirer rapidement le matériel constituant ladite première unité de localisation visuelle (A).

13. Dispositif d'intervention selon la revendication 5, dans lequel ladite première unité de localisation visuelle (A), logée dans ledit premier caisson (1), est constituée d'un module de piles électriques au lithium (9) de trente-cinq ampères, d'un boîtier générateur de courant haute fréquence (8), d'un feu à quatre éclats blancs successifs (7) formant la lampe à éclats, d'un système de mise en marche et d'arrêt par télécommande, du bouton de commande manuelle Marche / Arrêt (36), de câblages et de raccords de connexion électrique rapide (10, 11) reliant ces divers éléments entre eux.

14. Dispositif d'intervention selon la revendication précédente, dans lequel le feu à quatre éclats successifs blancs (7) est un feu à quatre éclats successifs blancs de très haute puissance, monté sur une ventouse mécanique (14), ou sur tout autre support approprié, permettant son adaptation instantanée sur le dessus du premier caisson (1) refermé après la sortie dudit feu.

15. Dispositif selon la revendication 13 ou 14, dans lequel le feu à quatre éclats successifs blancs (7) est alimenté soit par le module de piles électriques au lithium (9) permettant son utilisation continue pendant de plus de douze heures, soit par une prise d'allume cigare d'un véhicule au sol fournissant du courant électrique d'une tension de douze volts ou de vingt-quatre volts, soit par un deuxième module de piles électriques au lithium, identique au premier, non représenté prévu pour l'alimentation en énergie de secours du boîtier générateur de courant haute fréquence (8).

16. Dispositif d'intervention selon la revendication 5, dans lequel ladite seconde unité (2), dite de balisage (B) logée dans ledit second caisson étanche (2), ne dépasse pas un poids de vingt kilogrammes et son encombrement est tel qu'il peut être porté d'une main par une seule personne, ledit second caisson (2) étant muni comme le premier caisson (1) d'un dispositif d'ouverture et de fermeture rapides à encliquetage (18, 19) et d'une valve de dépressurisation (3b).

17. Dispositif d'intervention selon la revendication précédente, **caractérisé en ce que** ledit second caisson (2) comporte un fond (2b) revêtu d'un capitonnage alvéolaire à deux étages (4b, 4c) en plastazote dans lequel sont ménagées des cellules de compartimentage, permettant de loger, de maintenir de façon fiable et d'extraire rapidement le matériel constituant la seconde unité dite de balisage (B) de ladite surface ou aire de pose choisie (H) pour l'intervention de la ou desdites équipes aéroportées et notamment héliportées.

18. Dispositif selon l'une quelconque des revendications précédentes, **caractérisé en ce que** le corps des dites balises (16a à 16e) renferme un boîtier de dix piles électriques (31) de type standard AA ou LR6, la forme dudit corps, dans la partie conique inférieure, est calculée pour renvoyer une partie de la lumière vers le bas afin de créer un halo de lumière au sol donnant au pilote un effet de plan d'horizon et la hauteur dudit corps est telle qu'elle permette de ménager une zone éclairante située au-dessus des herbes ou d'autres obstacles naturels au sol.

19. Dispositif d'intervention selon la revendication 8, **caractérisé en ce qu'**il comporte un boîtier récepteur (33) des émissions radio de la télécommande (34) inséré à l'intérieur du corps (20) des dites balises (16a, 16e) pour permettre à ladite au moins une- personne intervenant au sol (x) d'allumer ou d'éteindre à distance les dites balises (16a à 16 e) et d'en modifier l'intensité d'éclairage, sans se déplacer et sans pénétrer dans la zone de sécurité d'évolution au sol de l'aéronef et notamment de l'hélicoptère, à l'aide d'une télécommande (34) contenue dans ledit second caisson (2), ledit boîtier récepteur (33) pouvant être aussi directement commandé par le pilote de l'aéronef guidé et notamment de l'hélicoptère, transportant la ou lesdites équipes aéroportées et notamment héliportées, grâce à la radio de celui-ci.

20. Dispositif d'intervention selon l'une quelconque des revendications 5 à 19, **caractérisé en ce que** l'éclairage généré par lesdites balises (16a à 16e) est une lumière dite «lumière froide» obtenue à l'aide de diodes LED (22, 23 , 24) générant une lumière de grande intensité tout en bénéficiant d'une consommation extrêmement réduite permettant ainsi d'assurer un éclairage de plus de douze heures à pleine puissance, le circuit électronique supportant les diodes LED (22, 23, 24) étant conçu de manière à pouvoir utiliser les balises (16a à16 e) soit à l'oeil nu, soit avec des jumelles de vision nocturne, soit en infrarouge pour des applications militaires.

21. Dispositif d'intervention selon la revendication précédente, dans lequel la lumière émise par lesdites balises (16a à 16e) est émise sous un angle compris entre zéro degré sur un plan horizontal et plus trente-cinq degrés dans le plan vertical ce qui représente l'angle sur lequel un aéronef et notamment un hélicoptère, arrive depuis le lointain, un jeu de cônes optiques (25) concentrant un rayon de lumière bleue vers le haut sous un angle de trente-cinq degrés autour de l'axe vertical desdites balises (16a à 16e), permettant ainsi à un pilote d'aéronef et notamment d'hélicoptère, transportant la ou lesdites équipes aéroportées et notamment héliportées, d'approcher du Y constitué de cinq points blancs qui deviennent bleus lorsque son aéronef et notamment son hélicoptère passe à la verticale dudit Y, ce changement de couleur du blanc vers le bleu confirmant audit pilote de l'aéronef et notamment de l'hélicoptère qu'il se trouve bien au-dessus de ladite surface ou aire de pose choisie (H) qui lui a été préparée par ladite au moins une personne intervenant au sol (x).

22. Dispositif d'intervention selon la revendication 8, **caractérisé en ce que** le changement des divers niveaux de puissance est obtenu soit par de simples impulsions exercées sur le bouton (35) de la télécommande (34) prévue à cet effet, soit par la radio de l'aéronef et notamment de l'hélicoptère, soit en actionnant manuellement le bouton de commande (37) situé sur le corps de chaque balise.

23. Dispositif d'intervention selon la revendication 5, **caractérisé en ce que** ladite seconde unité (2) comporte également sous forme d'un kit, contenu dans ledit second caisson (2), la manche à air (17) munie d'un système d'éclairage autonome (47) et un mat emboîtable (43) permettant sa mise en place rapide afin de donner au pilote de l'aéronef et notamment de l'hélicoptère transportant la ou lesdites équipes aéroportées et notamment héliportées, la ou les informations de vent sur ladite surface ou aire de pose choisie (H).

24. Dispositif d'intervention selon la revendication précédente, **caractérisé en ce que** ledit mât (43) est constitué de sections cylindriques ou tubes en fibre de carbone (44, 45) emboîtables très rapidement, résistant au souffle sans risquer de s'envoler et dressant, après montage, ladite manche à air (17) à plus de 4 mètres au-dessus du sol.

25. Dispositif d'intervention selon la revendication 23 ou 24, dans lequel ledit mât (43) est fixé à l'aide d'un piquet en inox (42) emboîté dans ladite section cylindrique ou tube inférieur 45 du mât 43 et s'enfonçant dans le sol.

26. Dispositif d'intervention selon l'une quelconque des revendications 23 à 25, dans lequel ledit mât (43) est fixé sur tout support approprié à l'aide d'une ventouse (46) à commande par levier mécanique.

27. Dispositif d'intervention selon l'une quelconque des revendications 23 à 26, dans lequel ladite manche à air (17) est éclairée de manière autonome à l'aide d'une lampe autonome étanche (47), fixée en son centre par un support (48) ou par tous moyens appropriés, constituée d'un groupe de lampes LED lui assurant une autonomie d'éclairage de plus de douze heure en lumière blanche dite « lumière froide ».

## Claims

1. Method of identifying and illuminating any chosen landing surface or area (H) for intervention at night or during bad weather by at least one team transported by air and in particular by helicopter carrying out a rescue operation or operations, co-operating with at least one person intervening on the ground (x) on said chosen landing surface or area (H) to enable a rapid and safe landing and/or take-off for all types of aircraft and in particular the helicopter transporting said team or teams transported by air, in particular by helicopter, **characterised in that** when said at least one person intervening on the ground (x) has deployed, positioned and illuminated equipment, it enables said team transported by air and in particular by helicopter to locate, identify, approach and fly over any chosen landing surface or area (H) by means of visual identification and a ground lighting system comprising at least 5 independent beacons with an independent power supply which cause a change in brightness, which is visible from the aircraft with the aid of the ground lighting system, which emits a central, substantially horizontal (α) beam of vertically (β) concentrated light towards the sky as well as a light of different colour, whereby only the central beam is perceptible as the aircraft passes a vertical position with respect to this ground lighting system, in order to land on and/or take off again from the landing area with absolute reliability.

2. Method of intervention as claimed in claim 1, whereby said at least one person intervening on the ground (x), having chosen said landing surface or area in readiness for the intervention and taken a reading of its precise geographic co-ordinates by means of a GPS receiver (41), contacts, by any communication means, in particular radio or telephonic, said team or teams transported by air and in particular by helicopter, in order to transmit immediately the precise geographic co-ordinates of said chosen landing surface or area (H) to be identified and illuminated to enable them to carry out their intervention on it, at night or in bad weather, to enable said intervention to take place within the shortest possible time.

3. Method as claimed in claim 2, whereby said at least one person intervening on the ground (x) makes ready for the easy transportation of equipment to said chosen landing surface or area (H) to enable a first visual identification unit (A) and a second ground lighting unit (B) to be installed on the latter with a view to providing means for visually identifying said chosen landing surface or area (H), thereby enabling a safe approach and a reliable landing for all types of aircraft and in particular helicopters transporting said team or teams transported by air and in particular by helicopter.

4. Method as claimed in any one of the preceding claims, whereby the pilot of the aircraft and in particular helicopter transporting said team or teams transported by air and in particular by helicopter, arriving in a vertical position with respect to the chosen landing surface or area (H) sees a change in the colour generated by the ground lighting unit disposed in Y pattern (16a to 16e) from white to blue, thus confirming to him that his aircraft and in particular his helicopter is correctly located above said chosen landing surface or area (H) and also confirming to him, as he passes vertically, the axis and safe direction of approach, said axes and safe direction of approach having been defined beforehand by said at least one person intervening on the ground (x), having made sure that there are no obstacles in the surrounding area and made allowance for information about wind on the chosen landing surface or area (H).

5. Intervention device for implementing a method as claimed in any one of the preceding claims, **characterised in that** it comprises two sealed boxes (1, 2) which can be easily carried by said at least one person intervening on the ground (x) and intended to be disposed on said chosen landing surface or area (H), the interior volume of said boxes (1, 2) being designed to accommodate, hold and permit the extraction, with absolute reliability, of the equipment constituting said device needed for said intervention with a view to setting up rapidly and efficiently said equipment comprising two units respectively disposed in each of said boxes (1, 2), namely:
- a first unit for visually identifying (A) said chosen landing surface or area (H), comprising at least one lamp with successive white flashes (7) connected to a high-frequency power generator box (8), said first unit, having been installed in position, being visible in flight at a distance in excess of forty kilometres to the pilot of the aircraft and in particular the helicopter transporting said intervention team or teams transported by air and in particular by helicopter,
- a second unit for providing ground lighting (B) on said landing surface or area (H) chosen for said team or teams transported by air and in particular by helicopter, comprising at least five independent light beacons (16a to 16e) with an independent electric power supply and equipped with a set of optical cones (25) with a central orifice (27) for emitting a light oriented about the vertical axis of each beacon and faces (26) for emitting a light extending from the horizontal plane and along the angle (α) formed by these faces (26), designed to generate at least five fixed points of light on the ground once they have been positioned, and elements of a kit (42, 43, 44, 45 and 46) enabling a complete wind sock (17) and its independently powered lighting system (47) to be mounted instantaneously, said second unit, once positioned, providing a ground lighting system for said chosen landing surface or area (H), compatible with any system used for situations where vision is difficult and in particular night vision binoculars.

6. Intervention device as claimed in the preceding claim, whereby said at least one person intervening on the ground (x) ensures that said chosen landing surface or area (H) can be visually identified with the aid of the equipment and in particular by instantaneously securing a very high-power lamp with successive white flashes (7) with the aid of a mechanical sucker (14) to any appropriate support and in particular to the cover (1 a) of said first box (1) of the device proposed by the invention from which he has just extracted it, and by illuminating it with the aid of a go/stop button (36) powered by the module containing lithium powered batteries (9) connected to the high-frequency power generator box (8) to enable the pilot of the aircraft and in particular the helicopter transporting said team or teams being transported by air and in particular by helicopter to identify the intervention site visually at night, in flight, from a distance in excess of forty kilometres.

7. Intervention device as claimed in the preceding claim, whereby said at least one person intervening on the ground (x) provides ground lighting for said chosen landing surface or area (H) by positioning at least 5 beacons (16a to 16e), sealed to prevent ingress by rain and dust, with an independent electric power supply, so as to generate at least five fixed points of light describing a Y on the ground, said beacons (16a to 16e) generating a light in the form of "cold light" which can be seen by the pilot of the approaching aircraft, and in particular helicopter, transporting said team or team transported by air and in particular by helicopter, either with the naked eye, or with night vision binoculars, or by infrared for military applications.

8. Intervention device as claimed in the preceding claim, whereby said at least one person intervening on the ground (x) modifies the illumination power levels of said beacons (16a to 16e) depending on the night vision equipment being used by the pilot of the approaching aircraft, and in particular helicopter, transporting said team or teams transported by air and in particular by helicopter, and/or depending on the different levels of night darkness encountered during the approach, by simple pulses applied either to the control button (35) of a remote control (34) provided for this purpose or to the manual control button (37) disposed on the body of each of the beacons.

9. Intervention device as claimed in any one of the claims 5 to 8, whereby said at least one person intervening on the ground (x) transmits to the pilot of the aircraft and in particular the helicopter transporting said team or teams by air and in particular by helicopter, information relating to the wind by erecting very rapidly the cylindrical sections or tubes (44, 45) of the push-fit mast (43) on which a wind sock (17) is mounted, and supporting at its centre, by any appropriate means, an independently powered lighting system (47), said mast (43) being fixed with the aid of a stainless steel stake (42) inserted in the ground or with the aid of a sucker (46) applied to any appropriate support.

10. Intervention device as claimed in claim 5, in which said sealed boxes (1, 2) are provided in the form of boxes or carrying cases made from polypropylene copolymer resin and fitted with rapid opening and closing means with a ratchet system (18, 19) and de-pressurisation valves (3a, 3b).

11. Intervention device as claimed in the preceding claim, in which the weight of the first box (1) is not more than ten kilograms and its size is limited so that it can be carried with the aid of a carrying handle 6a by a single person.

12. Intervention device as claimed in the preceding claim, in which the interior of said first box (1) is lined with a cellular padding (4a) made from a nitrogen-based plastic or any other appropriate material with a base (1 b) incorporating cells forming compartments, hereafter referred to as cells or pockets, enabling the equipment constituting said first visual identification unit (A) to be reliably accommodated, retained and removed rapidly.

13. Intervention device as claimed in claim 5, in which said first visual identification unit (A) accommodated in said first box (1) comprises a module with thirty six ampere, lithium powered batteries (9), a high-frequency power generator box (8), a lamp with four successive white flashes (7) constituting the flashing lamp, a remotely controlled activation and deactivation system, the on/off manual control button (36), cables and rapid electric connector fittings (10, 11) connecting these various elements to one another.

14. Intervention device as claimed in the preceding claim, **characterised in that** the lamp with four successive white flashes (7) is a lamp with four successive white flashes of very high power, mounted on a mechanical sucker (14) or on any other appropriate support, enabling it to be instantaneously adapted to the top of the first box (1) when closed once said lamp has been removed.

15. Device as claimed in claim 13 or 14, in which the lamp with four successive white flashes (7) is powered either by the lithium powered battery module (9) permitting continuous use for more than twelve hours, or by a cigarette lighter socket of a vehicle on the ground supplying electric current at a voltage of twelve volts or twenty four volts or, by a second lithium powered battery module, identical to the first, not illustrated, in order to provide the high-frequency current generator box (8) with an emergency power supply.

16. Intervention device as claimed in claim 5, in which said second unit (2) or ground lighting system (B) housed in said second sealed box (2) does not weigh more than twenty kilograms and its size is such that it can be carried by hand by a single person, said second box (2), like said first box (1), being fitted with a rapid opening and closing means with a ratchet system (18, 19) and a de-pressurisation valve (3b).

17. Intervention device as claimed in the preceding claim, **characterised in that** said second box (2) has a base (2b) lined with a cellular padding with two levels (4b, 4c) made from a nitrogen-based plastic incorporating cells forming compartments enabling the equipment constituting the second unit (B) for lighting the ground (H) to be housed, reliably retained and rapidly extracted, in readiness for intervention by said team or teams being transported by air and in particular by helicopter.

18. Device as claimed in any one of the preceding claims, **characterised in that** the body of said beacons (16a to 16e) contains a housing with ten standard type AA or LR6 electric batteries (31), and the shape of said body in the bottom conical part is designed to direct some of the light downwards in order to create a halo of light on the ground, providing the pilot with the effect of a map of the horizon, and the height of the body is such that it enables a zone to be illuminated in the area above grass or other natural obstacles on the ground.

19. Intervention device as claimed in claim 8, **characterised in that** it comprises a box (33) inserted inside the body (20) of said beacons (16a, 16e) for receiving remotely controlled radio transmissions (34) to enable said at least one person intervening on the ground (x) to illuminate or extinguish said beacons (16a to 16e) remotely and to modify the intensity of the illumination without having to move and without having to enter the security zone established on the ground for the aircraft and in particular the helicopter, with the aid of a remote control system (34) contained in said second box (2), it also being possible for said receiver box (33) to be controlled directly by the pilot of the guided aircraft and in particular helicopter transporting said team or teams by air, and in particular by helicopter, by means of its radio.

20. Intervention device as claimed in any one of claims 5 to 19, **characterised in that** the illumination generated by said beacons (16a to 16e) is a light of the type known as "cold light" generated with the aid of LED diodes (22, 23, 24) generating a high-intensity light whilst offering the benefit of extremely low power consumption, thereby enabling illumination to be provided at full power for more than twelve hours, the electronic circuit used to mount the LED diodes (22, 23, 24) being designed so that the beacons (16a to 16e) can be seen either by the naked eye, or with night vision binoculars, or by infrared for military applications.

21. Intervention device as claimed in the preceding claim, in which the light emitted by said beacons (16a to 16e) is emitted at an angle of between zero degree on a horizontal plane and more than thirty five degrees in the vertical plane, which represents the angle at which an aircraft and in particular a helicopter arrives from a distance, and a set of optical cones (25) concentrates a ray of blue light upwards at an angle of thirty five degrees about the vertical axis of said beacons (16a to 16e), thereby enabling a pilot of an aircraft and in particular of a helicopter transporting said team or teams transported by air and in particular by helicopter, to approach the Y formed by five white points which turn blue when his aircraft and in particular his helicopter passes a vertical position with respect to said Y, this change in colour from white to blue confirming to said pilot of the aircraft and in particular of the helicopter that he is precisely above said chosen landing surface or area (H) prepared for him beforehand by said at least one person intervening on the ground (x).

22. Intervention device as claimed in claim 8, **characterised in that** the change in the various levels of power is obtained either by simple pulses applied to the button (35) of the remote control (34) provided for this purpose, or by the radio of the aircraft and in particular of the helicopter, or by manually activating the control button (37) disposed on the body of each beacon.

23. Intervention device as claimed in claim 5, **characterised in that** said second unit (2) also has, in kit form, contained in said second box (2), the wind sock (17) equipped with an independently powered lighting system (47) and a push-fit mast (43) enabling it to be installed rapidly in order to provide the pilot of the aircraft and in particular of the helicopter transporting said team or teams transported by air and in particular by helicopter with information about wind on said chosen landing surface or area (H).

24. Intervention device as claimed in the preceding claim, **characterised in that** said mast (43) is made up of cylindrical sections or tubes of carbon fibre (44, 45) which can be fitted together very rapidly and are resistant to wind without the risk of blowing away, and which, once assembled, enable said wind sock (17) to be mounted more than 4 metres above the ground.

25. Intervention device as claimed in claim 23 or 24, in which said mast (43) is secured with the aid of a stainless steel stake (42) fitted into said cylindrical section or bottom tube (45) of the mast (43) and inserted in the ground.

26. Intervention device as claimed in any one of claims 23 to 25, in which said mast (43) is secured to any appropriate support by means of a sucker (46) controlled by a mechanical lever.

27. Intervention device as claimed in any one of claims 23 to 26, in which said wind sock (17) is independently illuminated with the aid of an independently powered, sealed lamp (47), secured at its centre by a support (48) or by any appropriate means, comprising a group of LED lamps, thereby ensuring independently powered illumination in the form of white light in the form of "cold light" for more than twelve hours.

## Patentansprüche

1. Verfahren zur Lokalisierung und Befeuerung der gesamten ausgewählten Landefläche oder eines Landeplatzes (H) zum Nacht- oder Schlechtwettereinsatz von mindestens einer Luftfahrzeug- und vor allem Hubschraubermannschaft, die insbesondere eine oder mehrere Rettungshandlungen durchführt, mit mindestens einer am Boden operierenden Person (x) zusammenarbeitet, die sich auf der genannten ausgewählten Landefläche oder dem Landeplatz (H) befindet, um das schnelle und sichere Landen und/oder Starten aller Typen von Luftfahrzeugen und besonders Hubschraubern zu gestatten, welche die Luftfahrzeug- und vor allem die Hubschraubermannschaften transportieren. Es ist **dadurch** charakterisiert, dass es der genannten Luftfahrzeug- und vor allem Hubschraubermannschaft nach Entfaltung, Aufstellung und Beleuchtung des Materials durch die genannte, mindestens eine am Boden operierende Person gestattet, die ganze gewählte Landefläche oder den Landeplatz (H) ausfindig zu machen, zu lokalisieren, sich zu nähern und zu überfliegen, und dies durch visuelle Lokalisierung und eine Befeuerung, die aus mindestens 5 energieunabhängigen und -autonomen Funkfeuern gebildet wird, um einen vom Luftfahrzeug aus sichtbaren Lichtwechsel mit Hilfe einer Befeuerung hervorzurufen, die einen zentralen, deutlich horizontalen Strahl (α) von vertikal konzentriertem Licht (β) sowie ein Licht von unterschiedlicher Farbe gen Himmel aussendet, wobei nur der zentrale Strahl durch die Passage des Luftfahrzeugs mit der Vertikalen dieser Befeuerung wahrgenommen wird, um auf dem Landeplatz zu landen und/oder in voller Betriebssicherheit wieder zu starten.

2. Verfahren zum Einsatz gemäß Anspruch 1, in welchem die genannte, mindestens eine am Boden operierende Person (x), nach Auswahl der genannten Landefläche oder des Landeplatzes hinsichtlich des Einsatzes ausgewählt und seine genauen geografischen Koordinaten dank einem GPS-Empfänger (41) aufgenommen hat, dann Kontakt durch jegliches Kommunikationsmittel, vor allem Funk oder Telefon aufnimmt mit der oder den Luftfahrzeugmannschaften und insbesondere Hubschraubermannschaften, so dass die genauen geografischen Koordinaten der genannten ausgewählten Landefläche oder des Landeplatzes (H) zur Lokalisierung und Befeuerung übermittelt werden, damit diese ihr Handeln in der Nacht und bei schlechtem Wetter bestimmen können und dies in der schnellstmöglichen Zeit geschieht.

3. Verfahren gemäß Anspruch 2, in welchem die genannte, mindestens eine am Boden operierende, Person (x) die einfache Arbeitsvorbereitung des Materials auf der genannten ausgewählten Landefläche oder dem Landeplatz (H) absichert, so dass auf letzterem eine erste Einheit zur visuellen Lokalisierung (A) und eine zweite Befeuerungseinheit (B) aufgestellt wird, um die visuelle Lokalisierung der gewählten genannten Landefläche oder des Landeplatzes (H) abzusichern, was eine sichere Annäherung und ein zuverlässiges Landen aller Typen von Luftfahrzeugen und besonders von Hubschraubern gestattet, die eine oder die genannten Luftfahrzeug- und vor allem Hubschraubermannschaften transportieren.

4. Verfahren gemäß irgendeinem der vorgenannten Ansprüche, in welchem der Luftfahrzeug- und vor allem Hubschrauberpilot, der eine oder die Luftfahrzeug-und vor allem Hubschraubermannschaften transportiert, bei Ankunft in der Vertikalen der ausgewählten Landefläche oder des Landeplatzes (H) einen Farbwechsel wahrnimmt, der durch die in Y (16a bis 16e) angeordneten Befeuerungseinheit erzeugt wird, von Weiß nach Blau, und die ihm somit bestätigt, dass sich sein Luftfahrzeug und vor allem sein Hubschrauber genau über der ausgewählten genannten Landefläche oder dem Landeplatz (H) befindet und ihm ebenfalls während seines Vertikalflugs die Annäherungsachse und - richtung bestätigt, wobei die genannte Sicherheits-Annäherungsachse und - richtung vorher durch die genannte, mindestens eine am Boden operierende Person (x) festgelegt wurde, nachdem diese sich vom Fehlen von Umgebungshindernissen vergewissert und die Windinformationen an der ausgewählten Landefläche oder dem Landeplatz (H) berücksichtigt hatte.

5. Vorrichtung zum Einsatz zur Durchführung eines Verfahrens gemäß irgendeiner der vorgenannten Ansprüche, die **dadurch** charakterisiert ist, dass sie zwei dichte Behälter (1, 2) umfasst, die leicht durch die genannte, mindestens eine am Boden operierende Person (x) zu transportieren und dazu bestimmt sind, auf der ausgewählten, genannten Landefläche oder dem Landeplatz (H) angeordnet zu werden, wobei das Fassungsvermögen der genannten Behälter (1, 2) ausreicht, um in voller Betriebssicherheit das Material aufzunehmen, aufzubewahren und herauszunehmen, das die genannte Vorrichtung ausmacht, die notwendig ist zur genannten Funktion hinsichtlich ihrer schnellen und wirksamen Montage, wobei das genannte Material von zwei entsprechend in jedem der Behälter (1, 2) angeordneten Einheiten gebildet wird, und zwar:
- eine erste Einheit, so genannt zur visuellen Lokalisierung (A) der genannten ausgewählten Landefläche oder des Landeplatzes (H), die wenigstens eine Lampe mit aufeinander folgenden weißen Blinkfeuern (7) umfasst, die mit dem Schaltkasten eines Hochfrequenzgenerators (8) verbunden ist, wobei die genannte erste Einheit nach Aufstellung im Flug aus einer Entfernung von über vierzig Kilometern durch den Piloten des Luftfahrzeugs und vor allem des Hubschraubers sichtbar ist, der eine oder die Luftfahrzeug- und vor allem Hubschraubermannschaften zum Einsatz transportiert,
- eine zweite Einheit, so genannt zur Befeuerung (B), der genannten ausgewählten Landefläche oder des Landeplatzes (H) einer oder der genannten Luftfahrzeug- oder vor allem Hubschraubermannschaften, die mindestens fünf von elektrischer Energie unabhängige und autonome Funkleuchtfeuer (16a bis 16e) umfasst und mit optischen Kegeln (25) ausgerüstet sind, die eine Mittelöffnung (27) besitzen, um ein um die vertikale Achse jedes Funkfeuers gerichtetes Licht auszusenden und Flächen (26) besitzt, um ein Licht auszusenden, das von der waagerechten Ebene und gemäß dem Winkel (α) ausgeht, der durch diese Flächen (26) gebildet wird, dazu bestimmt, nach ihrer Aufstellung mindestens fünf feste Lichtpunkte am Boden zu erzeugen, und Elemente eines Satzes (42, 43, 44, 45 und 46), die eine Sofortmontage eines vollständigen Windsackes (17) ermöglichen und seines autonomen Beleuchtungssystems (47), wobei die genannte Einheit nach Aufstellung eine Befeuerung der genannten ausgewählten Landefläche oder des Landeplatzes (H) absichert, die kompatibel ist mit jeglichem schwierigen Sichtsystem und insbesondere mit Nachtsichtferngläsern.

6. Vorrichtung zum Einsatz gemäß dem vorgenannten Anspruch, in welchem die genannte, mindestens eine am Boden operierende Person (x) die visuelle Lokalisierung der ausgewählten genannten Landefläche oder des Landeplatzes (H) absichert, mit Hilfe des Materials und im besonderen durch sofortige Anbringung einer Lampe mit aufeinander folgenden weißen Blinkfeuern (7) sehr hoher Leistung mittels eines mechanischen Saugnapfes (14) auf jeglicher geeigneten Halterung und im besonderen auf dem Deckel (1a) des genannten Behälters (1) der Vorrichtung gemäß der Erfindung, aus dem sie gerade genommen wurde, und durch Entzünden mittels eines Ein/Aus-Knopfes (36), der durch das Modul von elektrischen Lithiumbatterien (9) gespeist wird, welches mit dem Schaltkasten des Hochfrequenzstromgenerators (8) verbunden ist, so dass es dem Piloten des Luftfahrzeugs und vor allem des Hubschraubers, der eine oder die Luftfahrzeug- oder Hubschraubermannschaften transportiert, möglich ist, im Fluge den Einsatzort aus einer Entfernung von über vierzig Kilometern nachts visuell zu lokalisieren.

7. Vorrichtung zum Einsatz gemäß dem vorgenannten Anspruch, bei welchem die genannte, mindestens eine am Boden operierende Person (x) die Befeuerung der genannten ausgewählten Landefläche oder des Landeplatzes (H) absichert, indem sie wenigstens 5 Leuchtfeuer (16a bis 16e) aufstellt, die regen- und staubdicht, von elektrischer Energie unabhängig und autonom sind, so dass diese mindestens fünf feste Lichtpunkte erzeugen, die ein Y am Boden zeichnen, wobei die genannten Leuchtfeuer (16a bis 16e) ein so genanntes "Kaltlicht" erzeugen, so dass dieses für den Piloten des Luftfahrzeugs und vor allem des Hubschraubers, der eine oder die Luftfahrzeug- oder Hubschraubermannschaften transportiert, bei der Annäherung nutzbar ist, nicht nur mit bloßem Auge, sondern auch mit Nachtsichtferngläsern und mit Infrarotgeräten bei militärischen Anwendungen.

8. Vorrichtung zum Einsatz gemäß dem vorgenannten Anspruch, bei welchem die genannte, mindestens eine am Boden operierende Person (x) durch einfache Impulse auf den Bedienknopf (35) einer zu diesem Zweck vorgesehenen Fernbedienung (34), oder auf den Knopf der Handbedienung (37), der sich auf dem Gehäuse jedes Funkfeuers befindet, die Beleuchtungsstärken der genannten Funkfeuer (16a bis 16e) ändert, in Abhängigkeit von den Nachtsichtgeräten des Luftfahrzeugs- und vor allem des Hubschrauberpiloten bei der Annäherung, der eine oder die Luftfahrzeug- oder Hubschraubermannschaften transportiert, und/oder in Abhängigkeit von den unterschiedlichen Dunkelheitsniveaus, die bei der Annäherung auftreten.

9. Vorrichtung zum Einsatz gemäß irgendeinem der Ansprüche 5 bis 8, bei welcher die genannte, mindestens eine am Boden operierende Person (x) die Übermittlung an den Luftfahrzeugs- und vor allem Hubschrauberpiloten sichert, der eine oder die Luftfahrzeug- oder Hubschraubermannschaften transportiert, mit Informationen über sehr schnell ansteigende Windstärken in den zylindrischen Abschnitten oder Rohren (44, 45) des eingesteckten Mastes (43), der von einem Windsack (17) überragt wird und in seiner Mitte durch jedes geeignete Mittel ein autonomes Beleuchtungssystem besitzt (47), wobei die Befestigung des genannten Mastes (43) mit Hilfe eines Inoxstabes (42) erreicht wird, der in den Boden eingesteckt oder mit Hilfe eines Saugnapfes (46) an jeglicher geeigneter Halterung angebracht wird.

10. Vorrichtung zum Einsatz gemäß dem Anspruch 5, in welchem sich die genannten dichten Behälter (1, 2) in Form von Behältern oder Koffern aus Kopolymer Polypropylen darstellen und mit einrastenden Schnellöffnungs- und - schließvorrichtungen (18, 19) und Druckentspannungsventilen (3a, 3b) ausgerüstet sind.

11. Vorrichtung zum Einsatz gemäß dem vorgenannten Anspruch, bei welcher das Gewicht des ersten Behälters (1) zehn Kilogramm nicht übersteigt und sein Umfang so reduziert ist, dass er mit Hilfe eines Transportgriffes 6a durch eine einzige Person getragen werden kann.

12. Vorrichtung zum Einsatz gemäß dem vorgenannten Anspruch, wo das Innere des ersten Behälters (1) mit einer wabenförmigen Polsterung (4a) aus Plastazote oder jedem anderen geeigneten, einen Boden (1 b) bildenden Material ausgekleidet ist, in welchem Zellen von Fächereinteilungen angeordnet sind, nachfolgend als Zellen oder Waben bezeichnet, die es gestatten, das die erste Einheit der visuellen Lokalisierung (A) darstellende Material zuverlässig unterzubringen, stabilisiert zu lagern und schnell herauszunehmen.

13. Vorrichtung zum Einsatz gemäß dem Anspruch 5, in welchem die genannte erste Einheit der visuellen Lokalisierung (A), untergebracht im genannten ersten Behälter (1), durch ein Modul von elektrischen Lithiumbatterien (9) von fünfunddreißig Ampere gebildet wird, von einem Hochfrequenzgeneratorschaltkasten (8), von einem Leuchtfeuer mit vier aufeinander folgenden weißen Blinkfeuern (7), das die Blitzlampe bildet, von einem System zum Ingangsetzen und Abschalten durch Fernsteuerung, dem manuellen Bedienknopf Ein/Aus (36), von Verkabelungen und Anschlüssen der elektrischen Schnellverbindung (10, 11), die diese verschiedenen Elemente untereinander verbinden.

14. Vorrichtung zum Einsatz gemäß dem vorgenannten Anspruch, in welchem ein Leuchtfeuer mit vier aufeinander folgenden weißen Blinkfeuern (7) ein Leuchtfeuer mit vier aufeinander folgenden weißen Blinkfeuern sehr hoher Leistung ist, das auf einem mechanischen Saugnapf (14) montiert ist, oder auf jeglicher anderen geeigneten Halterung, die die sofortige Anpassung an die Oberseite des ersten Behälters (1) erlaubt und nach Herausnehmen des genannten Leuchtfeuers wieder verschlossen wird.

15. Vorrichtung zum Einsatz gemäß dem Anspruch 13 oder 14, in welchem das Leuchtfeuer mit vier aufeinander folgenden weißen Blinkfeuern (7) entweder durch das Modul von elektrischen Lithiumbatterien (9) gespeist wird, was seine kontinuierliche Verwendung über mehr als zwölf Stunden gestattet, oder durch die Zigarettenanzündersteckdose eines Fahrzeugs am Boden, die den elektrischen Strom mit einer Spannung von zwölf oder vierundzwanzig Volt liefert, oder durch ein zweites Modul von elektrischen Lithiumbatterien, identisch dem ersten, nicht dargestellt, vorgesehen zur Einspeisung von Notenergie des Hochfrequenzstromerzeugerschaltkastens (8).

16. Vorrichtung zum Einsatz gemäß dem Anspruch 5, in welchem die genannte zweite Einheit (2), genannt Funkfeuer (B), untergebracht in dem genannten zweiten dichten Behälter (2), ein Gewicht von zwanzig Kilogramm nicht übersteigt und sein Umfang so ist, dass er mit einer Hand durch eine einzige Person getragen werden kann, wobei der zweite Behälter (2) wie der erste Behälter (1) mit einer einrastenden Schnellöffnungs- und -schließvorrichtung (18, 19) und einem Druckentspannungsventil (3b) ausgerüstet ist.

17. Vorrichtung zum Einsatz gemäß dem vorgenannten Anspruch, die **dadurch** charakterisiert ist, dass der genannte zweite Behälter (2) einen Boden beinhaltet (2b), der mit einer wabenförmigen Polsterung in zwei Etagen (4b, 4c) aus Plastazote ausgekleidet ist, in dem Zellen von Fächereinteilungen angeordnet sind, die es gestatten, das die zweite Einheit der Funkbefeuerung (B) der ausgewählten genannten Landefläche oder des Landeplatzes (H) für den Einsatz einer oder der genannten Luftfahrzeug- und vor allem Hubschraubermannschaften darstellende Material zuverlässig unterzubringen, stabilisiert zu lagern und schnell herauszunehmen.

18. Vorrichtung zum Einsatz gemäß irgendeinem der vorgenannten Ansprüche, der **dadurch** charakterisiert ist, dass das Gehäuse der genannten Funkfeuer (16a bis 16e) ein Fach für zehn elektrische Batterien (31) vom Typ Standard AA oder LR6 enthält, wobei die Form des genannten Gehäuses im unteren konischen Abschnitt so berechnet ist, dass ein Teil des Lichts nach unten geleitet wird, damit am Boden ein Lichtkreis entsteht, der dem Piloten einen Effekt der Horizontlinie und der Höhe des genannten Körpers gibt und somit gestattet, einen beleuchteten Bereich einzurichten, der oberhalb von Gräsern oder anderen natürlichen Hindernissen am Boden liegt.

19. Vorrichtung zum Einsatz gemäß dem Anspruch 8, der **dadurch** charakterisiert ist, dass sie ein Empfangsgehäuse (33) für Funkstrahlungen der Fernbedienung (34) umfasst, die im Inneren des Gehäuses (20) der genannten Funkfeuer (16a, 16e) untergebracht ist, um es der mindestens einen am Boden operierenden Person (x) zu gestatten, mit Hilfe einer Fernbedienung (34), die in dem genannten zweiten Behälter (2) enthalten ist, die genannten Funkfeuer (16a bis 16e) zu erleuchten und zu löschen und deren Leuchtstärke zu ändern, ohne sich fortbewegen und in den Sicherheitsbereich des Luftfahrzeugs und vor allem des Hubschraubers am Boden eindringen zu müssen. Das genannte Empfangsgehäuse (33) kann auch direkt durch den Piloten des gesteuerten Luftfahrzeugs und vor allem Hubschraubers, der eine oder die genannten Luftfahrzeug- und vor allem Hubschraubermannschaften transportiert, über Funk bedient werden.

20. Vorrichtung zum Einsatz gemäß irgendeinem der Ansprüche 5 bis 19, **dadurch** charakterisiert, dass die durch die genannten Funkfeuer (16a bis 16e) erzeugte Beleuchtung ein so genanntes "Kaltlicht" ist, das mit Hilfe von Leuchtdioden LED (22, 23, 24) erreicht wird, wobei ein Licht großer Intensität erzeugt wird und man von einem extrem reduzierten Verbrauch profitiert, der es somit gestattet, eine Beleuchtung von mehr als zwölf Stunden bei voller Leistung zu sichern, da der Elektronikkreis die Leuchtdioden (22, 23, 24) stützt, die so konzipiert sind, dass die Funkfeuer (16a bis 16e) entweder mit bloßem Auge oder mit Nachtsichtferngläsern oder mit Infrarot bei militärischen Anwendungen genutzt werden können.

21. Vorrichtung zum Einsatz gemäß dem vorgenannten Anspruch, in welchem das von den genannten Funkfeuern (16a bis 16e) ausgesendete Licht unter einem Winkel zwischen null Grad in einer horizontalen Ebene und mehr als fünfunddreißig Grad in einer vertikalen Ebene ausgesandt wird, was einen Winkel darstellt, unter dem ein Luftfahrzeug und vor allem ein Hubschrauber von weitem ankommt. Ein Satz von optischen Konussen (25), der einen blauen Lichtstrahl unter einem Winkel von fünfunddreißig Grad um die vertikale Achse der genannten Funkfeuer (16a bis 16e) nach oben aussendet, gestattet es somit dem Luftfahrzeug- und vor allem Hubschrauberpiloten, der eine oder die Luftfahrzeug-und vor allem Hubschraubermannschaften transportiert, sich dem Y zu nähern, das aus fünf weißen Punkten gebildet wird, die blau werden, wenn sein Luftfahrzeug und vor allem sein Hubschrauber die Vertikale des genannten Y passiert, wobei dieser Farbwechsel von weiß nach blau dem genannten Piloten des Luftfahrzeugs und vor allem des Hubschraubers bestätigt, dass er sich genau über der genannten ausgewählten Landefläche oder dem Landeplatz (H) befindet, die ihm durch die mindestens eine am Boden operierende Person (x) vorbereitet wurden.

22. Vorrichtung zum Einsatz gemäß dem Anspruch 8, der **dadurch gekennzeichnet ist, dass** der Wechsel der unterschiedlichen Leistungsniveaus entweder durch einfache Impulse auf den Knopf (35) der Fernbedienung (34) erreicht werden, die zu diesem Zweck vorgesehen ist, oder über Funk vom Luftfahrzeug und vor allem vom Hubschrauber, oder durch Handbetätigung des Bedienknopfes (37), der auf dem Gehäuse jedes Funkfeuers sitzt.

23. Vorrichtung zum Einsatz gemäß dem Anspruch 5. der **dadurch gekennzeichnet ist, dass** die genannte zweite Einheit (2) auch in Form eines im genannten zweiten Behälter (2) enthaltenen Satzes den Windsack (17) umfasst, der mit einem autonomen Beleuchtungssystem (47) ausgestattet ist und einem ineinander gesteckten Mast (43), der eine schnelle Aufstellung ermöglicht, um dem Piloten des Luftfahrzeugs und vor allem des Hubschraubers, der eine oder die Luftfahrzeug- und vor allem Hubschraubermannschaften transportiert, eine oder die Informationen über den Wind auf der genannten ausgewählten Landefläche oder dem Landeplatz (H) zu geben.

24. Vorrichtung zum Einsatz gemäß dem vorgenannten Anspruch, der **dadurch gekennzeichnet ist, dass** der genannte Mast (43) aus zylindrischen Abschnitten oder Rohren aus Karbonfaser (44, 45) besteht, sehr schnell zusammen steckbar ist, widerstandsfähig gegenüber Luftbewegung ist, ohne dass man riskiert, dass er wegfliegt, und nach der Montage wird der genannte Windsack (17) in mehr als 4 Metern über dem Boden errichtet.

25. Vorrichtung zum Einsatz gemäß dem Anspruch 23 oder 24, bei welchem der genannte Mast (43) mit Hilfe eines Inoxstabes (42) befestigt wird, der in den genannten zylindrischen Abschnitt oder in das Rohr unterhalb 45 des Mastes 43 eingesteckt und in den Boden gerammt wird.

26. Vorrichtung zum Einsatz gemäß irgendeinem der Ansprüche 23 bis 25, in welchen der genannte Mast (43) an der gesamten geeigneten Halterung mit Hilfe eines Saugnapfes (46) mit Bedienung durch einenmechanischen Hebel befestigt wird.

27. Vorrichtung zum Einsatz gemäß irgendeinem der Ansprüche 23 bis 26, in welchen der genannte Windsack (17) mit Hilfe einer autonomen dichten Lampe autonom beleuchtet wird, befestigt ist in seiner Mitte durch eine Halterung (48) oder durch alle geeigneten Mittel, gebildet von einer Gruppe von LED-Lampen, die ihm eine Beleuchtungsautonomie von mehr als zwölf Stunden Weißlicht, so genanntem "Kaltlicht" sichern.
